(19) **Europäisches Patentamt / European Patent Office / Office européen des brevets**

(11) **EP 3 140 624 B1**

(12) **EUROPÄISCHE PATENTSCHRIFT**

(45) Veröffentlichungstag und Bekanntmachung des Hinweises auf die Patenterteilung:
**09.06.2021   Patentblatt 2021/23**

(21) Anmeldenummer: **15726516.6**

(22) Anmeldetag: **30.04.2015**

(51) Int Cl.:
*G01G 11/00* (2006.01)     *G01G 9/00* (2006.01)

(86) Internationale Anmeldenummer:
**PCT/DE2015/100176**

(87) Internationale Veröffentlichungsnummer:
**WO 2015/169281 (12.11.2015 Gazette 2015/45)**

(54) **VERFAHREN ZUR ERMITTLUNG DES NETTOGEWICHTS EINES IN EINEM EINZELNEN PRODUKTBEREICH BEFINDLICHEN PRODUKTS**

METHOD FOR ESTIMATING THE NET WEIGHT OF A PRODUCT IN A SINGLE PRODUCT AREA.

PROCÉDÉ POUR ESTIMER LE POIDS NET D'UN PRODUIT DANS UNE ZONE UNIQUE DE PRODUIT.

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2014   DE 102014106509**

(43) Veröffentlichungstag der Anmeldung:
**15.03.2017   Patentblatt 2017/11**

(73) Patentinhaber: **WIPOTEC GmbH**
**67657 Kaiserslautern (DE)**

(72) Erfinder:
• **MONZ, Peter**
**66862 Kindsbach (DE)**

• **SIEGRIST, Michael**
**67659 Kaiserslautern (DE)**
• **ZINKE, Bernd**
**66399 Mandelbachtal (DE)**

(74) Vertreter: **Eder Schieschke & Partner mbB**
**Patentanwälte**
**Elisabethstraße 34**
**80796 München (DE)**

(56) Entgegenhaltungen:
**EP-A1- 2 194 374          EP-A2- 2 198 703**
**WO-A2-2008/095500     DE-A1- 10 136 980**
**JP-A- 2008 209 307**

**Beschreibung**

Die Erfindung betrifft Verfahren zur Ermittlung des Nettogewichts eines in einem einzelnen Produktbereich befindlichen Produkts. Derartige Verfahren finden u.a. in der Lebensmittelindustrie bei der Herstellung von Fertigpackungen Anwendung. Üblicherweise werden hierbei Schlauchbeutel als umhüllende Verpackung eingesetzt (beispielsweise Chips-Tüte).

Diese Schlauchbeutel bestehen aus einer dünnen Folie, welche von einer Rolle abgerollt zuerst als lange flache Bahn vorliegt, dann gefaltet und an einer Seite (Falz) verschlossen wird. Der so entstandene Schlauch wird anschließend an der Unterseite verschlossen, so dass sich ein befüllbarer Sack bzw. Beutel ergibt. Dieser wird mit dem zu verpackenden Produkt gefüllt und dann an einer als Oberseite dienenden Trennlinie ebenfalls verschlossen.

Der obere Verschluss der ersten Packung dient zugleich als unterer Verschluss für die nachfolgende zweite Packung. Anschließend kann der verschlossene erste Schlauchbeutel vom nachfolgenden Strang, also vom zweiten Beutel, abgetrennt (separiert) und einzeln weiterverarbeitet werden.

Als Weiterverarbeitung kommt zum Beispiel eine Inspektion und Kontrolle der Dichtigkeit, der Kennzeichnung oder des Inhalts der Beutel in Betracht. Der Inhalt des Beutels, also die im Beutel enthaltene Masse an Produkt, wird üblicherweise durch Wiegen der separierten Beutel überprüft. Die Untersuchung auf unzulässige Verunreinigungen erfolgt mittels Metallsuchgeräten oder Röntgeninspektionsgeräten. Die Analyse der auf dem Beutel vorhandenen Kennzeichnung kann mittels Bilderkennung (Barcodescanner, etc.) vorgenommen werden.

Die gesamte Prozedur der Produktabfüllung und Beutelinspektion kann sowohl in separaten Maschinen und Anlagen erfolgen als auch im Wesentlichen in einer kompakten Abfüll-/Verpackungs-/Inspektionsmaschine durchgeführt werden.

In manchen Fällen ist es vorteilhaft oder wünschenswert, die Beutel nicht unmittelbar nach dem Befüllen zu separieren, sondern sie als zusammenhängenden Strang oder Kette von Produkten weiterzubearbeiten. Die Verpackungen liegen in diesem Fall in Form einer zusammenhängenden Produktkette aus gefüllten und verschlossenen Schlauchbeuteln vor.

Wenn die gefüllten Schlauchbeutel noch als zusammenhängende Produktkette vorliegen und in der miteinander verbundenen Struktur gewogen werden sollen, beispielsweise, um die Füllorgane der Abfüllmaschine zu überwachen, anzusteuern bzw. zu regeln, so ist die für die Füllkopfregelung erforderliche präzise Bestimmung der Produktmasse in jedem einzelnen der Beutel erforderlich.

Der Messvorgang erfordert hierbei eine hohe Genauigkeit, um beim Abfüllen ein vorgegebenes oder ggf. gesetzlich gefordertes Nettogewicht der Produktmasse innerhalb enger Toleranzen (z.B. +/-0,1g) zu gewährleisten.

Zudem erfolgt die Herstellung industriell gefertigter Fertigpackungen üblicherweise mit sehr hoher Geschwindigkeit bzw. sehr hohem Durchsatz, so dass die Wägung in der Bewegung erfolgen muss, also die zu wiegende Packung sich während der Wägung in Bewegung befindet und nicht still steht (dynamische Wägung).

Prinzipiell unterscheidet man bei der dynamischen Wägung zwischen einer kontinuierlichen Wägung und einer diskontinuierlichen Wägung. Für eine kontinuierliche Wägung kommen Förderbandwaagen zum Einsatz, die für einen endlosen (kontinuierlichen) Strom von zu wiegendem losen Schüttgut den zeitlichen Massenstrom ermitteln. Für eine diskontinuierliche Wägung kommen selbsttätige Waagen für Einzelwägung (sogenannte Catchweigher) und selbsttätige Kontrollwaagen (sogenannte Checkweigher) zum Einsatz, die in der Lage sind, die individuellen Gewichtswerte von diskret vorliegenden (separaten) Einzelpackungen bzw. Gebinden zu ermitteln.

Bei der gewichtsmäßigen Untersuchung einer oben genannten zusammenhängenden Produktkette kann jedoch nachteiligerweise weder mit Förderbandwaagen, noch mit Checkweighern oder Catchweighern hinreichend genau das Gewicht des in den einzelnen Beuteln befindlichen Produkts ermittelt werden, da die zusammenhängenden benachbarten Beutel mechanische Koppelkräfte aufeinander ausüben, welche aufgrund dieses "Kraftnebenschlusses" zu unzulässigen Messabweichungen führen.

Ursächlich hierfür ist, dass eine Förderbandwaage als Messergebnis nur einen Massenstrom ermitteln kann, dessen zeitlicher Verlauf allerdings nur grobe Rückschlüsse auf das Einzelgewicht in den einzelnen Beuteln erlaubt. Checkweigher und Catchweigher als diskontinuierlich wiegende Waagen erwarten dagegen üblicherweise nur eine einzige separate (diskrete) zu wiegende Packung auf der Waagenplattform und können aufgrund des "Kraftnebenschlusses" zwischen den benachbarten Beuteln der Produktkette ebenfalls nur ungenaue Messergebnisse liefern.

Die Situation wird noch weiter erschwert, wenn die Wägevorrichtung als alleiniges Kontrollmessgerät in der Produktion von Fertigpackungen eine hundertprozentige Kontrolle gewährleisten und den gesetzlichen Vorschriften entsprechen soll. Dann muss diese Wägevorrichtung eine behördliche Bauartzulassung besitzen, und das Seriengerät muss eine regelmäßig wiederkehrende messtechnische Prüfung (Nacheichung) bestehen. Dies erfordert neben der hohen Messgenauigkeit auch eine hohe Reproduzierbarkeit der Messungen

Dokument EP 2 194 374 A1 offenbart ein Röntgeninspektionsgerät um das Gewicht einer Kette von zusammenhängenden Packungen zu bestimmen.

Der vorliegenden Erfindung liegt daher die Aufgabe zugrunde, ein Verfahren sowie eine Vorrichtung zu dessen Durchführung zu schaffen, welche eine Bestimmung der Nettofüllmenge (insbesondere des Nettogewichtes) eines Produktes in einem einzelnen Produktbereich innerhalb einer Produktkette mit mehreren zusammenhängenden (mechanisch gekoppelten) Produktbereichen (mehrere Verpackungen mit nur einer Kammer bzw. einem Produktbereich oder einer vorzugsweise vereinzelten Verpackung mit mehreren Kammern) mit einer hohen Genauigkeit und Geschwindigkeit ermöglichen.

Diese Aufgabe wird erfindungsgemäß mit einem Verfahren mit den Merkmalen des Anspruchs 1, sowie durch eine Vorrichtung mit den Merkmalen des Anspruchs 11 gelöst.

Im Sinne der Erfindung stellt ein Durchleuchten ein Durchstrahlen mit einer Strahlungsquelle (insbesondere Röntgenquelle) und Inspizieren mit einem strahlungsempfindlichen Detektor, insbesondere Kamera, dar.

Im Folgenden wird die im Sprachgebrauch sowie Handel übliche Bezeichnung Gewicht, wie beispielsweise Brutto- bzw. Gesamtgewicht und Nettogewicht bzw. Reingewicht eines Wägegutes oder Produktes, Verpackungsgewicht (TARA), etc. verwendet, obwohl die physikalisch korrekte Bezeichnung Masse wäre.

Das nachfolgende Verfahren kann teilweise (semiautomatisch) oder vollständig manuell oder vorzugsweise automatisch z.B. durch eine Steuerung, insbesondere durch eine Auswerte- und/oder Steuervorrichtung, ausgeführt werden. Zudem können Weiterverarbeitungsschritte, wie beispielsweise Sortierung, Klassieren, Ausschleusen (bzw. die Steuerung entsprechender Vorrichtungen wie Sortier-, Klassiervorrichtung, etc.) in Abhängigkeit der erfindungsgemäß ermittelten Werte vorgenommen werden.

Nach der Erfindung wird eine aus mehreren zusammenhängenden (mechanisch gekoppelten) Produktbereichen bestehende Produktkette (vorzugsweise jede Produktkette) sowohl insgesamt gewogen ($Gewicht_{Gesamtbrutto}$) als auch insgesamt durchleuchtet. Bevorzugt wird jede Produktkette (als jedes mal) gewogen. Alternativ hierzu kann des Gesamtgewicht ($Gewicht_{Gesamtbrutto}$) ermittelt werden, indem durch einmaliges Wiegen ein Referenzwert (beispielsweise Grauwert) gebildet wird und jede Produktkette nur mit diesem Referenzwert verglichen wird. Infolge des Durchleuchtens der Produktkette mit einer Röntgeneinrichtung werden Werte (Grauwerte) ermittelt, die derjenigen Röntgenstrahlung entsprechen, welche einen definierten Bereich der Produktkette bzw. die gesamte Produktkette durchdringt, d.h. nicht vom Produkt oder vom Verpackungsmaterial absorbiert wurden.

Die Ermittlung eines gesamten, insbesondere aufsummierten oder integrierten Gesamtwertes ($Grauwert_{Gesamtbrutto}$) aus vorgenannten gewonnenen Werten kann hierbei zeilenweise oder auch aus einer einzigen Röntgenaufnahme bzw. einem einzigen Röntgenbild der gesamten Produktkette erfolgen. Einzelne Werte für die Produktkette können ebenso sowohl zeilenweise als auch aus einer einzigen Röntgenaufnahme der gesamten Produktkette (mittels Bildauswertung) gewonnen werden.

Durch einfache Division ($Gewicht_{Gesamtbrutto}/Grauwert_{Gesamtbrutto}$) kann für die Produktkette ein grober Referenzwert $Ref_{Brutto}$ in der Einheit [Gramm pro Grauwert] bestimmt werden. Dieser beachtet jedoch nicht die Dichteunterschiede zwischen dem Produkt und dem Verpackungsmaterial. Auch das Produkt selbst kann sich aus verschiedenen Materialien bzw. Zerealien (Lebensmitteln) zusammensetzen, z.B. bei Beuteln mit Tütensuppe (mit Nudeln, Erbsen, Fleischstücken, etc.).

Weiterhin werden nach der Erfindung Bereiche mit jeweils einem einzelnen darin enthaltenen Produkt (Produktbereiche) vorgegeben oder durch Auswertung der ermittelten Werte ausgewählt. Eine derartige Auswahl kann beispielweise über einen detektierten sprunghaften Anstieg oder Abfall der ermittelten Werte erfolgen. Bei einem in Längsrichtung der Produktkette bewegten Produktstrom mit einer im Wesentlichen konstanten Breite der Produktkette kann ein derartiger (Produkt-)Bereich als Längsabschnitt vorliegen. Selbstverständlich ist es aber auch denkbar, einen beliebigen, flächigen Bereich zu ermitteln (Hüllkurve bzw. das einzelne Produkt einschließende Umrisslinie mittels Bildauswertung) oder (insbesondere im Falle von vorbekannter Position und/oder Abmessung des Produktes) vorzugeben.

Ebenso kann die Position einer geraden Trennlinie zwischen zwei benachbarten Verpackungen oder der Abstand zwischen zwei Produkten durch Auswertung der gewonnenen Werte ermittelt bzw. festgelegt werden, um einzelne (in Kammern) verpackte Produkte voneinander unterscheiden zu können. So ist es beispielsweise denkbar, eine Trennlinie (Trennung wird detektiert und (logische) Trennlinie (logische Verpackung) festgelegt) anhand einer Analyse der gewonnen Grauwerte (hälftiger Abstand benachbarter Maxima oder von Bereichen oberhalb eines bestimmten Wertes, eventuell inklusive Mittelwertbildung etc.), zu detektieren bzw. festzulegen und auf dieser Basis Bereiche (Beutel-Region) mit (oder ohne) jeweils darin enthaltenem Produkt zu definieren. Eine derartige definierte Trennlinie muss dabei nicht mit einer tatsächlichen, vorhandenen Naht, insbesondere Siegelnaht, übereinstimmen.

Nach vorgenommener Unterteilung der Produktkette in Produktbereiche wird nach der Erfindung ein Wert ($Grauwert_{ProduktbereichIBrutto}$) für jeden Bereich mit Produkt (Beutel-Region) bzw. jede "logische" Verpackung durch Aufsummieren oder Integrieren der gewonnen Werte, insbesondere Grauwerte, von Trennlinie zu Trennlinie (oder innerhalb einer Hüllkurve) ermittelt.

Aus den vorgenannten Werten kann erfindungsgemäß ein Gewicht des einzelnen Bereichs mit dem darin enthaltenen Produkt ($Gewicht_{ProduktbereichBrutto}$) aus der Beziehung

$$GewichtProduktbereichBrutto = \frac{GrauwertProduktbereichlBrutto}{GrauwertGesamtbrutto} \times GewichtGesamtbrutto = GrauwertProduktbereichBrutto \times RefBrutto$$

ermittelt werden.

Wenn das Gewicht des Verpackungsmaterials sehr viel kleiner ist als das Nettogewicht des Produkts im Produktbereich, dann kann als ausreichende Näherung das nach dem erfindungsgemäßen Verfahren ermittelte Bruttogewicht GewichtproduktbereichBrutto als das Nettogewicht (GewichtproduktbereichNetto) des Produkts angesehen werden. Diese Annahme kann für den einzelnen Produktbereich (eine Kammer einer Mehrkammerverpackung oder eine Einzelkammerverpackung) oder für die gesamte Produktkette getroffen werden.

Nach der Erfindung können auch andere Angaben einer Nettofüllmenge, wie beispielsweise ein Nettovolumen des in einer Verpackung enthaltenen Produktes, aus dem ermittelten Nettogewicht gewonnen werden. Derartige Angaben können auf leichte Weise aus dem ermittelten Nettogewicht mittels Umrechnung unter Verwendung vorbekannter Parameter der Produktkette gewonnen werden. Beispielsweise kann ein Nettovolumen bei einer vorgegebenen, vorzugsweise homogenen, Produktdichte auf einfache Weise durch Multiplikation mit dem ermittelten Nettogewicht gewonnen werden.

Das erfindungsgemäße Verfahren ermöglicht vorzugsweise auch eine Ermittlung der Nettofüllmenge eines einzelnen Produktbereichs in einer Produktkette mit mehreren zusammenhängenden (mechanisch gekoppelten) Produktbereichen, während eine derartige Produktkette in Bewegung ist und weitere Verarbeitungsschritte einem Abfüll- und Verschließvorgang folgen. So können in einer Produktionslinie qualitätssichernde Maßnahmen, wie Inspektion auf Fremdkörper, Verunreinigungen, Kennzeichnungskontrolle etc., nachfolgen, wobei das erfindungsgemäße Verfahren nach dem Abfüllen und Vorliegen einer Produktkette an einer beliebigen Position in der Produktionslinie (als deren integraler Bestandteil) eingebunden oder als eigenständige Inspektionsvorrichtung ausgebildet sein kann.

In weiterer Ausgestaltung der Erfindung kann das Gewicht des Produkbereichs ohne Produkt (TARA-Gewicht eines Produktbereichs) GewichtTARA vorbekannt sein oder ermittelt werden. Ebenso könnte das TARA-Gewicht der Produktkette (GewichtGesamtTA-RA) vorbekannt sein oder ermittelt werden.

Im Unterschied zur vorstehend erläuterten Näherung wird das Nettogewicht des in einer Verpackung befindlichen Produkts (GewichtProduktbereichNetto) bzw. das Nettogewicht der Produktkette (GewichtGesamtNetto) jetzt aus der Differenz von Bruttogewicht und einem vorgegebenen oder ermittelten TARA-Gewicht ermittelt.

$$GewichtProduktbereichNetto = GewichtProduktbereichBrutto - GewichtTARA$$

bzw.

$$GewichtGesamtNetto = GewichtGesamtbrutto - GewichtGesamtTARA$$

In weiterer Ausgestaltung der Erfindung kann das Gewicht des Verpackungsmaterials (GewichtTARA/L) pro Längeneinheit (z.B. in Gramm pro Meter) bzw. pro Flächeneinheit (z.B. in Gramm pro Quadratzentimeter) vorbekannt sein oder ermittelt werden. Das Gewicht des einzelnen Produktbereichs ohne Produkt (GewichtTARA) kann damit aus dem GewichtTARA/L und der detektierten Fläche des Produktbereichs bzw. der detektierten Gesamtfläche der Produktkette (oder deren Längen bei konstanter Breite (Längeproduktbereich bzw. LängeGesamt)) berechnet werden. Die Fläche bzw. Länge kann bevorzugt mittels der Röntgendurchleuchtung (und entsprechender Bildauswertung) bestimmt werden. Alternativ kann aber auch ein optischer Sensor, z.B. eine Lichtschranke oder eine optische Kamera, verwendet werden.

$$GewichtTARA = \frac{GewichtTARA}{L} \times Fläche\,des\,Bereiches$$

$$Fläche\,des\,Bereiches = Länge_{Produktbereich} \times (konstante)Breite$$

Das Nettogewicht des in einer Verpackung befindlichen Produkts (GewichtProduktbereichNet-to) lässt sich wieder aus der Differenz des Bruttogewichts (GewichtProduktbereichBrutto) und dem Gewicht der Verpackung ohne Produkt (GewichtTARA) berechnen.

$$\text{Gewicht}_{\text{ProduktbereichNetto}} = \text{Gewicht}_{\text{ProduktbereichBrutto}} - \text{Gewicht}_{\text{TARA}}$$

In einer weiteren Ausgestaltung der Erfindung wird mindestens eine Unterregion (z.B. rechteckförmig) ohne Produkt innerhalb der Produktkette vordefiniert (TARA-Region) und hierfür einen Grauwert bzw. eine Grauwertzahl ($\text{Grauwert}_{\text{RegionTARA}}$) und die Fläche der TARA-Region $\text{Fläche}_{\text{RegionTARA}}$ ermittelt (Im Folgenden werden Grauwertzahl und Grauwert gleichartig verwendet). Bevorzugt können auch mehrere TARA-Regionen definiert und deren mittlere Grauwertzahl ermittelt werden. Hieraus kann mittels Division ein $\text{Grauwert}_{\text{TARA}}$ in Abhängigkeit wenigstens eines Parameters der Abmessung (vorzugsweise der Länge oder der Fläche) gebildet werden.

Die Definition der Unterregion kann vor Analyse der gewonnen Grauwerte in unterschiedlichen Varianten vorliegen und während einer Auswertung mittels einer Kausalitätsprüfung zu einem erwarteten Wertebereich geändert werden. Zudem ist es auch denkbar, eine TARA-Region durch Analyse der Grauwerte (analog zur Festlegung der Produktbereiche) selbst zu definieren (mittels Bildauswertung oder Schwellwertbetrachtung, also beispielsweise ein Bereich mit konstanten geringen Werten, also Minima bzw. Unterschreiten eines Grauwertschwellwertes).

Wenn das Gewicht ($\text{Gewicht}_{\text{RegionTARA}}$) der zuvor ausgewählten (garantiert produktfreien) TARA-Region bekannt ist, oder ermittelt wurde z.B. durch Multiplikation der Grauwertzahl ($\text{Grauwert}_{\text{RegionTARA}}$) mit der Referenz ($\text{Ref}_{\text{Brutto}}$), dann kann nachfolgend das TARA-Gewicht des gesamten Beutels berechnet werden. Dies erfolgt über das Verhältnis der $\text{Fläche}_{\text{RegionTARA}}$ der TARA-Region zur $\text{Fläche}_{\text{Produktbereich}}$ des Produktbereichs im Röntgenbild, und ist zulässig, weil auch in dem Bereich mit Produkt (Produkt-Region) ein TARA darstellendes Verpackungsmaterial rund um das Produkt herum vorhanden ist.

$$\text{Gewicht}_{\text{RegionTARA}} = \text{Ref}_{\text{Brutto}} \times \text{Grauwert}_{\text{RegionTARA}}$$

$$\text{Gewicht}_{\text{TARA}} = \text{Gewicht}_{\text{RegionTARA}} \times \frac{\text{Fläche}_{\text{Produktbereich}}}{\text{Fläche}_{\text{RegionTARA}}}$$

Falls vorab aus einer (vorzugsweise einmaligen) Referenzmessung mit einem TARA-Abschnitt einer leeren Verpackung von beliebiger Dimension (beispielsweise Verpackungsschnipsel) sowohl deren Gewicht ($\text{Gewicht}_{\text{AbschnittTARA}}$) wie auch deren Grauwert ($\text{Grauwert}_{\text{AbschnittTARA}}$) und Fläche (bzw. Länge) ermittelt werden konnten, so kann zur Verbesserung der TARA-Bestimmung anstelle des $\text{Ref}_{\text{Brutto}}$ der besser geeignete $\text{Ref}_{\text{TARA}}$ verwendet werden.

$$\text{Ref}_{\text{TARA}} = \text{Gewicht}_{\text{AbschnittTARA}} / \text{Grauwert}_{\text{AbschnittTARA}}$$

Die bisher genannten Methoden vernachlässigen, dass das anfangs ermittelte Gesamtgewicht der Produktkette ($\text{Gewicht}_{\text{Gesamtbrutto}}$) und der Gesamtgrauwert der Produktkette ($\text{Grauwert}_{\text{Gesamtbrutto}}$) ein Gemisch aus dem Produkt und dem Verpackungsmaterial darstellen, welche aber unterschiedliche Dichtewerte aufweisen.

In einer bevorzugten Ausgestaltung der Erfindung wird daher das TARA-Gewicht der gesamten Produktkette ($\text{Gewicht}_{\text{GesamtTARA}}$) ermittelt.

Dies kann z.B. erfolgen, indem das Gewicht des Verpackungsmaterials ($\text{Gewicht}_{\text{Länge-TARA}}$) pro Längeneinheit (z.B. in Gramm pro Meter) bzw. pro Flächeneinheit (z.B. in Gramm pro Quadratzentimeter) vorbekannt ist oder ermittelt wird, dieses mit der detektierten Fläche $\text{Fläche}_{\text{Gesamt}}$ der Produktkette (oder deren Länge $\text{Länge}_{\text{Gesamt}}$ bei konstanter Breite) multipliziert wird, und daraus das TARA-Gewicht der gesamten Produktkette ($\text{Gewicht}_{\text{KetteTARA}}$) berechnet wird. Die Fläche bzw. Länge der Produktkette kann bevorzugt mittels der Röntgendurchleuchtung (und entsprechender Bildauswertung) bestimmt werden.

$$\text{Gewicht}_{\text{GesamtTARA}} = \text{Gewicht}_{\text{LängeTARA}} \times \text{Länge}_{\text{Gesamt}}$$

Anschließend kann das Nettogewicht der Produktkette ($\text{Gewicht}_{\text{GesamtNetto}}$) aus der Differenz des Bruttogewichts des Produktkette ($\text{Gewicht}_{\text{Gesamtbrutto}}$) und dem TARA-Gewicht der Produktkette ($\text{Gewicht}_{\text{GesamtTARA}}$) berechnen werden.

$$\text{Gewicht}_{\text{GesamtNetto}} = \text{Gewicht}_{\text{Gesamtbrutto}} - \text{Gewicht}_{\text{GesamtTARA}}$$

Danach kann das ermittelte Nettogewicht der gesamten Produktkette (Gewicht$_{GesamtNet-to}$) zu korrekten Anteilen auf die einzelnen Beutel aufgeteilt werden.

Dies erfolgt erfindungsgemäß durch eine einfache Verhältnisrechnung. Die aufsummierten Grauwerte der Beutel-Region (Grauwert$_{ProduktbereichlBrutto}$) werden ins Verhältnis gesetzt zum Gesamtgrauwert der Produktkette (Grauwert$_{Gesamtbrutto}$).

$$\text{Gewicht}_{ProduktbereichNetto} = \text{Gewicht}_{GesamtNetto} \times (\text{Grauwert}_{ProduktbereichBrutto} / \text{Grauwert}_{Gesamtbrutto})$$

Diese Methode verwendet nicht mehr den möglicherweise fehlerbehafteten groben Referenzwert Ref$_{Brutto}$, vernachlässigt bei der Integration des Grauwertes für jeden Beutel aber ebenfalls, dass das Produkt und das Verpackungsmaterial unterschiedliche Dichtewerte aufweisen. Denn in der Produktregion überlagert sich das Produkt mit der unteren und der oberen Verpackungsfolie.

Daher wird in einer weiteren bevorzugten Ausgestaltung der Erfindung vor der Integration des Grauwertes (Grauwert$_{ProduktbereichBrutto}$) des Beutels eine Normierung des Röntgenbildes ausgeführt.

Wie oben beschrieben, wird zunächst das TARA-Gewicht der gesamten Produktkette (Gewicht$_{GesamtTARA}$) ermittelt.

Hierfür wird erneut mindestens eine Unterregion mindestens einer Verpackung vordefiniert (TARA-Region) und hierfür eine Grauwertzahl (Grauwert$_{RegionTARA}$) in Abhängigkeit wenigstens eines Parameters der Abmessung und die Fläche Fläche$_{RegionTARA}$ ermittelt. Bevorzugt können auch mehrere TARA-Regionen definiert und deren mittlere Grauwertzahl ermittelt werden.

Die Definition der Unterregion kann vor Analyse der gewonnen Grauwerte in unterschiedlichen Varianten vorliegen und während einer Auswertung mittels einer Kausalitätsprüfung zu einem erwarteten Wertebereich geändert werden. Zudem ist es auch denkbar, eine TARA-Region durch Analyse der Grauwerte selbst zu definieren (beispielsweise Bereich mit konstanten geringen Werten, also Minima).

Wenn das Gewicht (Gewicht$_{RegionTARA}$) der zuvor ausgewählten (garantiert produktfreien) TARA-Region bekannt ist, oder ermittelt wurde z.B. durch Multiplikation der Grauwertzahl (Grauwert$_{RegionTARA}$) mit der Referenz (Ref$_{Brutto}$), dann kann nachfolgend das TARA-Gewicht der gesamten Produktkette Gewicht$_{GesamtTARA}$ berechnet werden. Dies erfolgt über das Verhältnis der Fläche$_{RegionTARA}$ der TARA-Region zur Fläche$_{Gesamt}$ der Produktkette im Röntgenbild, und ist zulässig, weil auch in dem Bereich mit Produkt (Produkt-Region) ein TARA darstellendes Verpackungsmaterial rund um das Produkt herum vorhanden ist.

$$\text{Gewicht}_{RegionTARA} = \text{Ref}_{Brutto} \times \text{Grauwert}_{RegionTARA}$$

$$\text{Gewicht}_{GesamtTARA} = \text{Gewicht}_{RegionTARA} \times \frac{\text{Fläche}_{Gesamt}}{\text{Fläche}_{RegionTARA}}$$

Falls vorab aus einer (einmaligen) Referenzmessung mit einem TARA-Abschnitt einer leeren Verpackung von beliebiger Dimension sowohl deren Gewicht (Gewicht$_{AbschnittTA-RA}$) als auch deren Grauwert (Grauwert$_{AbschnittTARA}$) und Fläche (bzw. Länge) ermittelt werden konnten, so kann zur Verbesserung der TARA-Bestimmung anstelle des Ref$_{Brutto}$ der besser geeignete Ref$_{TARA}$ verwendet werden.

$$\text{Ref}_{TARA} = \text{Gewicht}_{AbschnittTARA} / \text{Grauwert}_{AbschnittTARA}$$

Anschließend wird das Nettogewicht der Produktkette (Gewicht$_{GesamtNetto}$) aus der Differenz des Bruttogewichts der Produktkette (Gewicht$_{Gesamtbrutto}$) und dem TARA-Gewicht der Produktkette (Gewicht$_{GesamtTARA}$) berechnen werden.

$$\text{Gewicht}_{GesamtNetto} = \text{Gewicht}_{Gesamtbrutto} - \text{Gewicht}_{GesamtTARA}$$

In bevorzugter Ausgestaltung der Erfindung kann anschließend eine Normierung des Röntgenbildes ausgeführt werden. Hierzu kann man z.B. die mittlere Grauwertzahl der TARA-Region(en) vom gesamten Röntgenbild subtrahieren, und dann z.B. alle entstandenen negativen Grauwertzahlen verwerfen (löschen). Man erhält dann ein normiertes Röntgenbild, welches nur noch aus reinen dem Produkt zugeordneten Grauwertzahlen besteht.

Anschließend kann das zuvor ermittelte Nettogewicht der gesamten Produktkette (Gewicht$_{GesamtNetto}$) zu korrekten Anteilen auf die einzelnen Beutel bzw. Produktbereiche aufgeteilt werden.

Dies erfolgt erfindungsgemäß durch eine einfache Verhältnisrechnung. Die aufsummierten Grauwerte des (normierten) Produktbereichs (Grauwert$_{ProduktbereichNormiert}$) werden ins Verhältnis gesetzt zum (normierten) Gesamtgrauwert der Produktkette. Jedoch wird nun nicht der ursprüngliche von Produkt und Verpackungsmaterial vermische Grauwert (Grauwert$_{Gesamtbrutto}$) verwendet, sondern die neu berechnete Summe aller normierter Grauwerte der Produktkette (Grauwert$_{GesamtNormiert}$).

$$\text{Gewicht}_{ProduktbereichNetto} = \text{Gewicht}_{GesamtNetto} \times (\text{Grauwert}_{ProduktbereichNormiert}/ \text{Grauwert}_{GesamtNormiert})$$

Der Vorteil der erfindungsgemäßen Lösung besteht drin, dass das Brutto-Gesamtgewicht (beispielsweise durch Wiegen einer leeren Produktkette bzw. des Verpackungsmaterials hierfür) und gegebenenfalls auch das TARA-Gesamtgewicht mittels geeichter Waage(n) ermittelt werden können. Dann ist auch das durch digitale Subtraktion entstandene Netto-Gesamtgewicht eichfähig und auch das durch digitale Verhältnisbildung (prozentuale Aufteilung) entstandene Nettogewicht in den einzelnen Beuteln.

Die Waage(n) kann bzw. können Bestandteil der Vorrichtung oder separat angeordnet sein.

Die Gewichtsbestimmung kann vor, während oder nach dem Durchleuchten erfolgen. Die Gewichtsbestimmung kann anstelle mit Waagen auch mittels des Durchleuchtens selbst erfolgen, beispielsweise mittels sogenanntem vergleichenden Röntgenwiegen (wo man mittels mindestens einmaliger Gewichtsreferenzmessung einer bekannten Referenzpackung die Gewichte aller weiteren Packungen durch Schwellwertvergleich der Grauwerte mit denen der Referenzpackung ermittelt.

Ein weiterer Vorteil der erfindungsgemäßen Lösung ist die Tatsache, dass die anteilsmäßige Aufteilung des exakt ermittelten Netto-Gesamtgewichts aus einem einzigen Röntgenbild abgeleitet werden kann und unabhängig ist von der Kalibrierung der Röntgeneinrichtung, welche durch äußere Einflüsse oder Langzeiteffekte beeinflusst worden sein kann.

Ein weiterer Vorteil dieser Lösung ist, dass keine komplizierte Geometrieauswertung bzw. Flächenbetrachtung erforderlich ist, sondern mit einfachen Geometrien, wie Rechtecken oder Dreiecken gearbeitet werden kann. Es ist aber auch denkbar, eine exakte Geometrieauswertung der Umrandung (Kontur) der Regionen anzuwenden, um noch mehr Genauigkeit zu erzielen.

Ein weiterer Vorteil der erfindungsgemäßen Lösung ist, dass bei Verwendung der oben genannten TARA-Region(en) für diese TARA-Region(en) ein Kontrollwert K$_{RegionTARA}$ ermittelt werden kann.

$$\text{K}_{RegionTARA} = \text{Grauwert}_{RegionTARA}/ \text{Fläche}_{RegionTARA})$$

Der Kontrollwert kann ausgewertet werden, um unzulässige Abweichungen von einem Grenzwert zu erkennen und z.B. eine Warnmeldung an den Bediener zu generieren. Der Kontrollwert kann der permanenten Überwachung der TARA im laufenden Produktionsprozess dienen und TARA-Schwankungen melden. Die Änderung der TARA-Grauwerte in Bezug zu einer bestimmten TARA-Fläche müssen jedoch nicht nur auf eine Dickenänderung des Verpackungsmaterials zurückgeführt werden. Sie können ggf. auch durch Veränderungen an der Durchleuchtungsvorrichtung bedingt sein, z.B. durch Schwankungen der Spannung der Röntgenröhre.

Wenn vorab eine TARA-Referenzmessung mit einem bekannten (ungefüllten) TARA-Abschnitt (siehe oben) durchgeführt wurde, kann der Kontrollwert der TARA-Region K$_{RegionTARA}$ auch mit dem Kontrollwert des Abschnitts K$_{TARA}$ verglichen oder zu diesem ins Verhältnis gesetzt werden, z.B. um einen Korrekturwert Korr für die gesamte Messanordnung zu generieren. Beispielsweise könnte das ermittelte TARA-Gewicht des Beutels oder sogar das Netto-Gewicht des Beutels mit dem Korrekturwert Korr multipliziert werden.

Diese Korrektur könnte zusätzlich oder alternativ den aktuellen K$_{RegionTARA}$ mit zeitlich älteren K$_{RegionTARA}$ vergleichen, einen "gleitenden Mittelwert" für das TARA ermitteln und eine Nachführung des "gleitenden Mittelwerts" ermöglichen.

$$\text{K}_{TARA} = \text{Grauwert}_{AbschnittTARA}/ \text{Fläche}_{AbschnittTARA})$$

$$\text{Korr} = \text{K}_{RegionTARA}/ \text{K}_{TARA})$$

Bei der erfinderischen Lösung können eventuell auftretende Winkelfehler der Röntgengeometrie aufgrund der genauen Ortskenntnis von der Produktgeometrie (aus dem Röntgenbild) in bekannter Weise korrigiert werden.

Die erfindungsgemäße Lösung hat in der Praxis sehr gute Resultate für Verpackungsmaterial aus dünner Folie erbracht, denn dort konnte problemlos das einfache Absorbtionsgesetz verwendet werden und ein konstanter Absorbtionskoeffizient (Alpha) angenommen werden.

Die erfindungsgemäße Lösung kann aber in einer bevorzugten Lösung auch ergänzt werden um eine Korrektur des Absorbtionskoeffizienten (Alpha). Diese Korrektur kann den Frequenzeinfluss, d.h. die Dickenabhängigkeit des Absorbtionskoeffizienten (Alpha) berücksichtigen. Sie kann aber auch weitere Effekte berücksichtigen, wie das Rauschen des Röntgendetektors, die Spannungsänderung an der Röntgenröhre, die Beschichtung der Verpackungsfolie mit z.B. metallischen Materialien wie z.B. Aluminium (Bedampfung) und Weiteres mehr.

Die Korrektur kann mit einem Korrekturwert arbeiten, der z.B. durch einmalige Vorermittlung des Gewichts und der Grauwertzahl eines repräsentativen Beutels sowohl mit als auch ohne Produkt bestimmt wird.

Erfindungsgemäß kann die Durchleuchtungsvorrichtung mit mehreren Energieleveln arbeiten, um die oben genannte Korrektur zu verbessern. (Stichwort: Dual-Energy)

Erfindungsgemäß können die oben genannten Unterregionen beliebig, also auch verpackungsübergreifend, gewählt werden.

In weiterer Ausgestaltung der Erfindung können mehrere Unterregionen (TARA-Regionen), wie vorstehend erläutert, vordefiniert werden. Eine Grauwertzahl (Grauwert$_{TARA}$) in Abhängigkeit wenigstens eines Parameters der Abmessung kann dann über alle TARA-Regionen ermittelt werden, wobei insbesondere bei variierenden Einzelgrauwerten eine Mittelwertbildung denkbar ist.

In weiterer Ausgestaltung der Erfindung können mehrere Produktketten parallel nebeneinander verarbeitet werden, so dass die erfindungsgemäße Bestimmung der Nettofüllmenge gleichzeitig für Verpackungen nebeneinander befindlicher, nicht miteinander verbundener Produktketten erfolgt.

Selbstverständlich ist es aber auch denkbar, dass eine Produktkette nicht nur in Bewegungsrichtung, sondern auch quer zur Bewegungsrichtung zusammenhängende Verpackungen nebeneinander in Form eines Arrays (aus mehren Zeilen und Spalten) aufweist. Im Falle einer Mehrspurigkeit können mehrere Einzelwaagen oder eine gemeinsame vor- oder nachgeschaltete Waage zum Wiegen der Produktketten eingesetzt werden.

Die Erfindung ist nicht beschränkt auf eine zusammenhängende Produktkette oder ein zusammenhängendes Array aus Behältnissen mit jeweils nur einer Kammer bzw. nur einem einzigen Produktbereich. Sie eignet sich ebenfalls für die Bestimmung der Nettofüllmenge in eventuell bereits vereinzelten Behältnissen, welche jedoch mehrere separate, zusammenhängende Kammern bzw. Produktbereiche (und damit eine Produktkette mit mehreren zusammenhängenden Produktbereichen) aufweisen, z.B. für das Hauptprodukt (z.B. Joghurt) sowie für Zerealien (z.B. Frucht oder Schokoladensplitter). Da derartige Behältnisse durch Tiefziehen aus einem durchgehenden Strang einer dickeren Endlosfolie entstehen und erst nach dem Befüllen separiert werden, nach dem bekannten Stand der Technik ist ein separates Wiegen des unbefüllten Behältnisses (TARA) in der laufenden Produktion unmöglich, und somit auch ein Regeln des Abfüllvorgangs. Als Alternative könnte nach dem bekannten Stand der Technik auf mehrere Wägungen, vor und nach dem Befüllen der einzelnen Kammern, ausgewichen werden. Hierdurch werden aber nachteiligerweise mehrere Waagen oder die zeitintensive Wägung auf nur einer Waage bei kompliziertem logistischen Ablauf in der Produktionslinie erforderlich.

Beim Herstellen eines Einkammerbechers durch Tiefziehen aus einer z.B. kreisförmigen Ronde ändert sich zwar die Dicke des tiefgezogenen Materials in den gezogenen Innenbereichen der Ronde. Im Röntgenbild stellt sich der tiefgezogene Becher jedoch in identischer Weise dar wie die ursprüngliche flache Ronde. Daher kann das erfindungsgemäße Verfahren auch bei komplizierten tiefgezogenen Behältnissen benutzt werden, ohne dass beispielsweise ausgestanzte (leere) Zwischenbereiche geometrisch analysiert werden müssten.

Auch bei losem Produkt (z.B. Pulver) in einem Schlauchbeutel ist keine aufwändige bildtechnische Analyse der zumeist stark zerklüfteten Produktbereiche erforderlich, was zudem oft auch stark beeinflusst wäre vom verwendeten Energielevel der Röntgenstrahlung.

Eine weitere Ausgestaltung der Erfindung kommt zur Anwendung, wenn das Verpackungsmaterial über seine Länge oder Breite eine stark schwankende Dicke aufweist. Dann wird erfindungsgemäß ein TARA-Röntgenbild der unbefüllten Verpackung aufgenommen. Dieses TARA-Röntgenbild wird pixelweise vom anschließend in befülltem Zustand durchleuchteten Brutto-Röntgenbild pixelweise subtrahiert. Hierfür ist eine möglichst identische Positionierung des Objektes bei den Durchleuchtungen erforderlich. Alternativ kann durch Bildverarbeitung und durch Nutzung von sogenannten Passa-Marken auf der Produktkette nachträglich eine deckungsgleiche Zuordnung der Pixel in beiden Röntgenbildern hergestellt werden. Dieses genannte Verfahren kann insbesondere im Pharmabereich zur Anwendung kommen, wo das TARA (und somit die relative Dickenschwankung des Verpackungsmaterials) sehr groß gegenüber der Nennfüllmenge (Netto) ist.

Das erfindungsgemäße Verfahren kann in unterschiedlichen Ausgestaltungen nicht nur zur Kontrolle und Überwachung (Protokollieren) der Nettofüllmenge verwendet werden, sondern auch zum Überwachen, Ansteuern oder Regeln einer Einrichtung zum Befüllen, beispielsweise der Füllorgane einer Abfülleinrichtung.

Um eine besonders hohe Verarbeitungsgeschwindigkeit zu ermöglichen, kann das Ermitteln des Nettogewichts bzw. der Nettofüllmenge eines in einer einzelnen Verpackung (Gewicht$_{Netto}$) befindlichen Produkts dynamisch, also während der Bewegung der Verpackungen bzw. der Produktkette, erfolgen. Hierbei ist selbst eine nicht getaktete, also kontinuierliche, gleichmäßige Bewegung der Produktkette möglich.

In den vorstehend erläuterten bevorzugten Ausgestaltungen der Erfindung wird das Gewicht der Verpackung ohne Produkt (Gewicht$_{TARA}$) automatisch durch Röntgen und Auswertung ermittelt, um die Nettofüllmenge zu berechnen und entsprechend den Vorgaben, insbesondere der Fertigverpackungsverordnung, zu kontrollieren und/oder auf der Verpackung zu kennzeichnen.

Neben oder zusätzlich zu flächig ausgebildeten Produktketten ist es auch denkbar, das erfindungsgemäße Verfahren auf mehrlagig ausgebildete Produktketten anzuwenden. Hierfür kann eine Röntgeneinrichtung mehrere zueinander versetzte Röntgenquellen und -detektoren aufweisen, um eine Tiefendarstellung (dreidimensionale) zu ermöglichen.

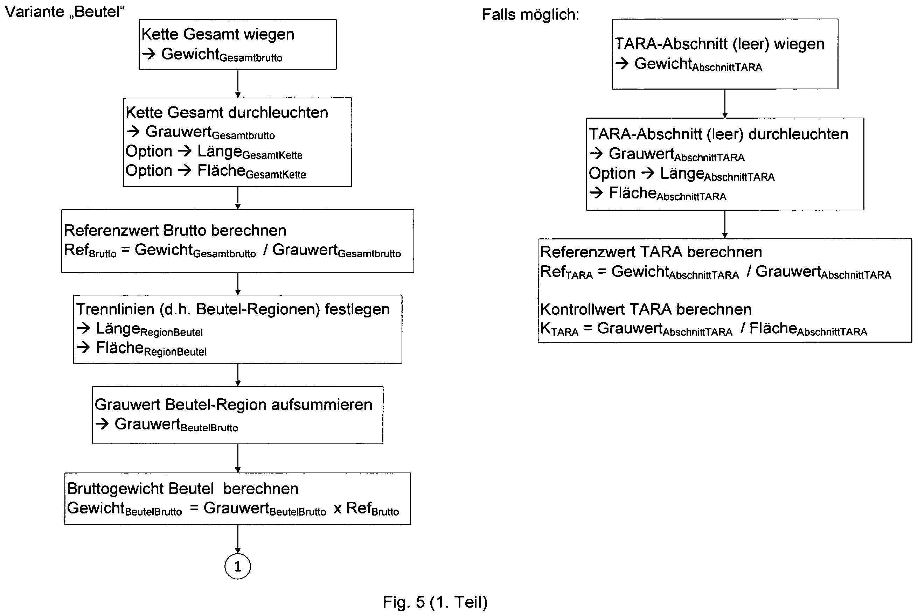

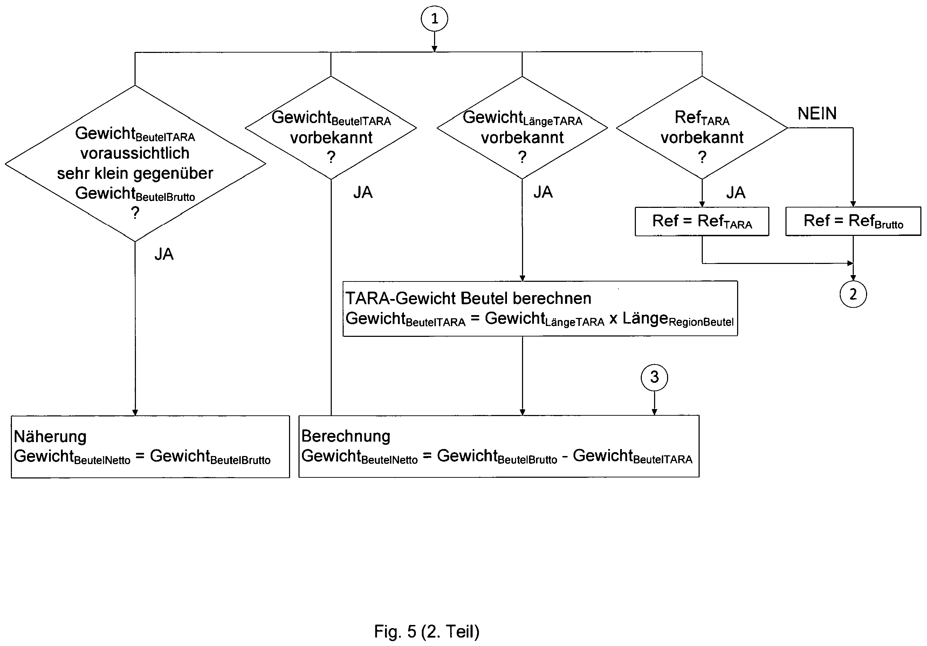

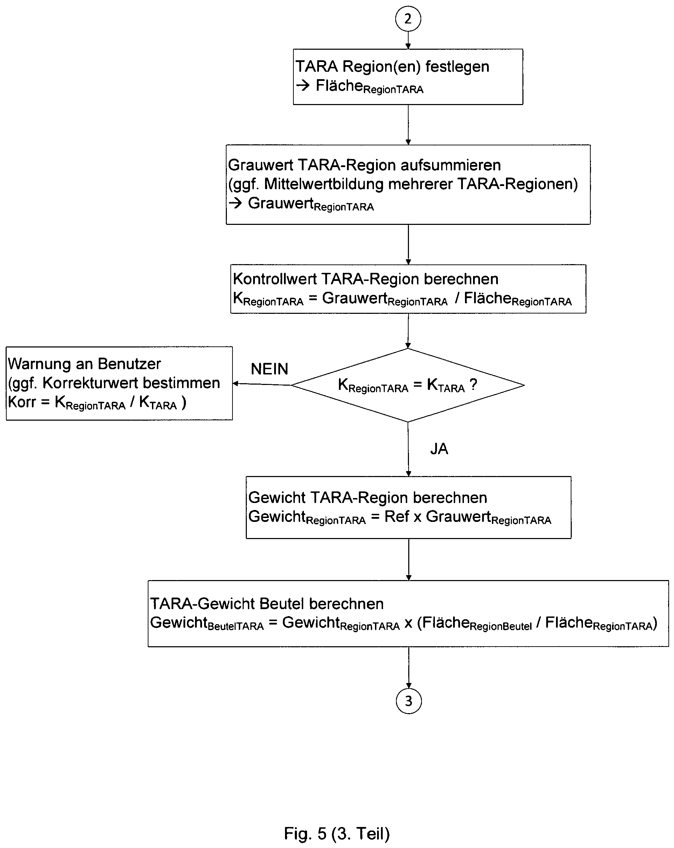

Verfahrensschritte "Beutel" (siehe Ablaufdiagramm Fig. 5)

1. Kette wiegen
2. Kette durchleuchten
3. Brutto Beutel bestimmen
4. TARA Beutel bestimmen
5. Netto Beutel berechnen
6. Ggf. Korrektur ausführen

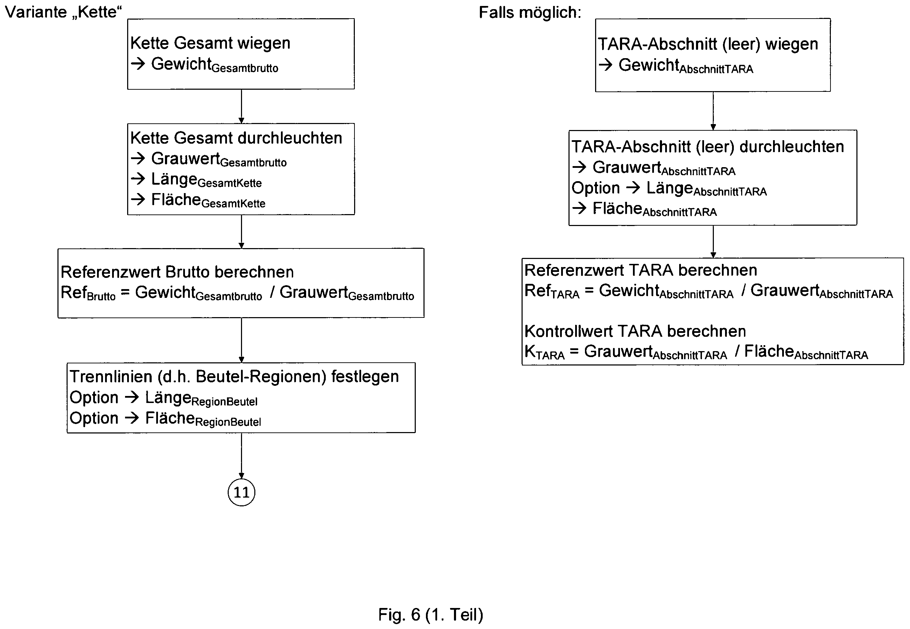

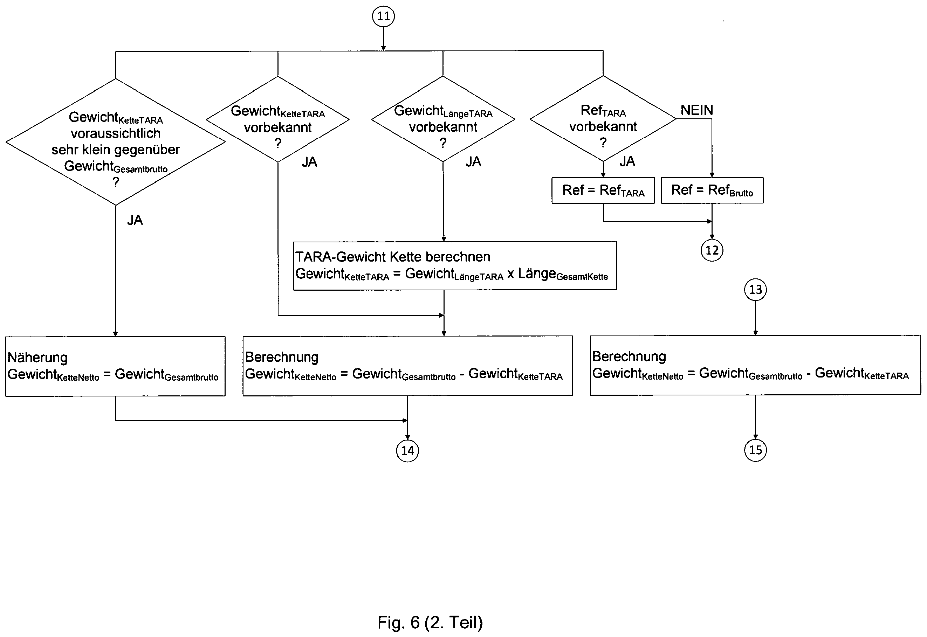

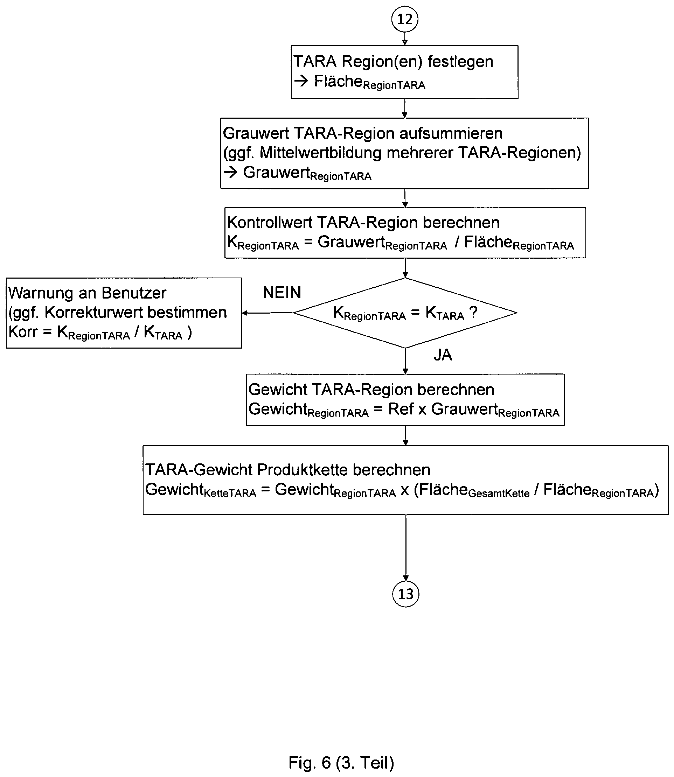

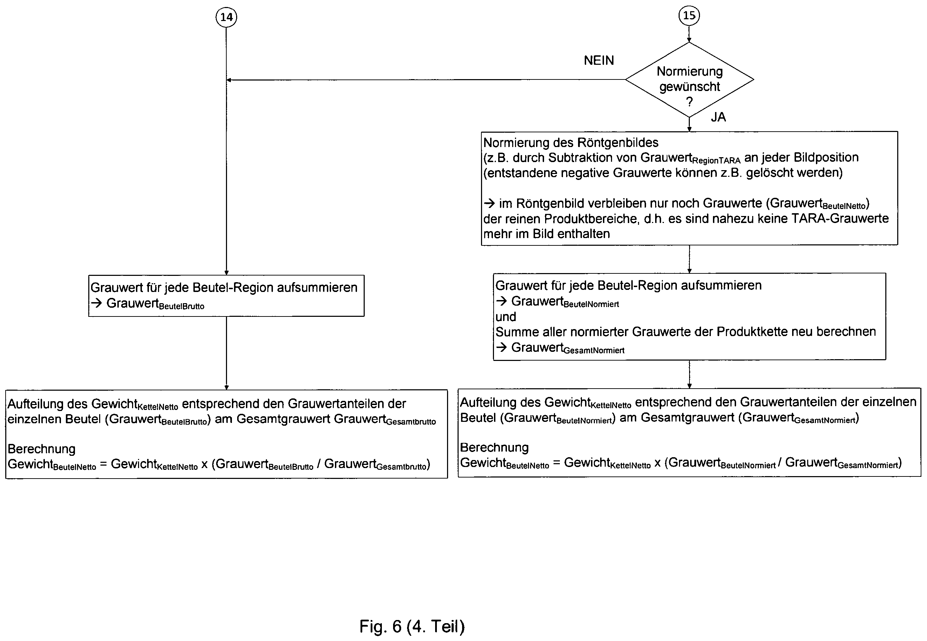

Verfahrensschritte "Kette" (siehe Ablaufdiagramm Fig. 6)

1. Kette wiegen
2. Kette durchleuchten
3. TARA Kette bestimmen
4. Netto Kette berechnen
5. Aufteilen Netto der Kette auf die Beutel
6. Ggf. Korrektur ausführen

Weitere vorteilhafte Ausgestaltungen ergeben sich aus den abhängigen Ansprüchen.
Die Erfindung wird nachfolgend anhand in der Zeichnung dargestellter Ausführungsbeispiele näher erläutert.
In der Zeichnung zeigen:

Fig. 1 eine Draufsicht eines Ausschnittes einer nach dem erfindungsgemäßen Verfahren arbeitenden Produktionslinie (erstes Ausführungsbeispiel) zum Befüllen und zur Verarbeitung von Schlauchbeuteln;
Fig. 2 eine Schnittansicht entlang der Linie I-I' in Fig. 1;
Fig. 3 eine Draufsicht eines Ausschnittes einer nach dem erfindungsgemäßen Verfahren arbeitenden Produktionslinie (zweites Ausführungsbeispiel) zum Befüllen und Verarbeiten von Bechern;
Fig. 4 eine Schnittansicht entlang der Linie II-II' in Fig. 3:
Fig. 5 ein Ablaufdiagramm Variante "Beutel":
Fig. 6 ein Ablaufdiagramm Variante "Kette";
Fig. 7 eine Draufsicht auf einen Mehrkammerbecher;
Fig. 8 eine perspektivesche Ansicht eines Mehrkammerbechers nach Fig. 7;
Fig. 9 eine einspaltige Produktkette aus mehreren Mehrkammerbechern nach Fig. 7 und Fig. 8 und
Fig. 10 ein Array einer Produktkette aus mehreren Mehrkammerbechern nach Fig. 7 und Fig. 8.
Fig. 11a eine Seitenansicht einer Beutelkette (Produktkette) mit mehreren voneinander separierten (unterteilten), jedoch zusammenhängenden Beuteln,
Fig. 11b eine Draufsicht auf die Beutelkette nach Fig. 11a;
Fig. 11c ein Grauwertbild der Beutelkette nach Fig. 11b;
Fig. 11d ein korrigiertes (bereinigtes) Grauwertbild nach Fig. 11c;
Fig. 11e ein invers dargestelltes Grauwertbild nach Fig. 11d mit einem eingezeichneten Produktbereich und
Fig. 11f. ein invers dargestelltes Grauwertbild nach Fig. 11d mit eingezeichneten TARA-Regionen.

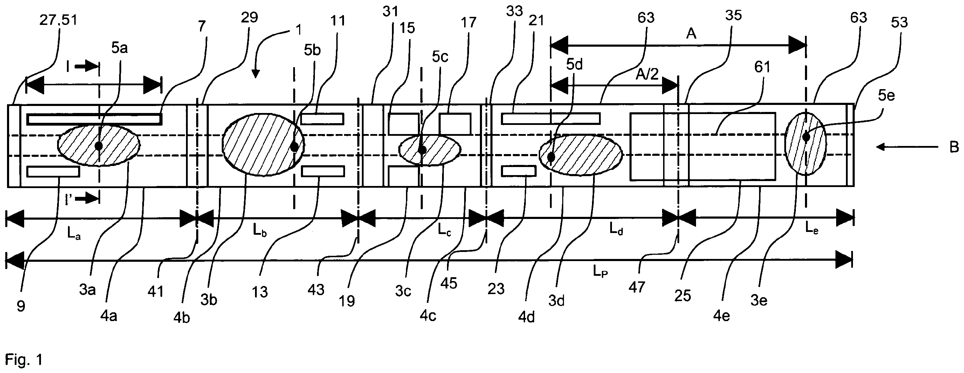

Die in Fig. 1 dargestellte Produktkette 1 bzw. der Produktstrang weist mehrere zusammenhängende, nicht separierte Einzelverpackungen 4a-4e (beispielsweise in Form von Beuteln) von darin enthaltenen Produkten 3a bis 3e auf. Die Schlauchbildung aus einer auf einer Rolle befindlichen Folienbahn konstanter Breite, die Befüllung mit Produkten, sowie die Unterteilung bzw. Trennung (ohne die Produktkette 1 zu separieren) in zusammenhängende Verpackungen mittels Siegelnähten (Schweißen, Pressen, etc.) erfolgt in üblicher Weise, wie beispielsweise in der WO 2011/050355 A1 beschrieben. Um eine Nettofüllmenge, insbesondere Nettogewicht, einer Einzelverpackung 4a-4e zu ermitteln, stellt sich als Hauptproblem dar, dass die tatsächlichen Siegelnähte 27, 29, 31, 33, 35 zwischen den einzelnen Beuteln ungleichmäßig verschweißt sind und daher die Steifigkeit der Siegelnähte 27, 29, 31, 33, 35 variiert, und somit stets andere Kraftauswirkungen zwischen zwei jeweils benachbarten Beuteln auftreten. Ein Wiegen eines Abschnittes innerhalb der Produktkette 1 führt daher nur zu ungenauen, beispielsweise den Anforderungen der Fertigpackungsverordnung nicht genügenden Ergebnissen.

Nach dem erfindungsgemäßen Verfahren wird die Produktkette 1 daher mittels einer in der Zeichnung nicht dargestellten Röntgeneinrichtung, bestehend aus einer Röntgenquelle und einem Sensor, insbesondere Zeilensensor, durchleuchtet, so dass Grauwerte in Abhängigkeit der Abmessung (Länge bei konstanter Breite, Fläche, etc.) der Produktkette gewonnen werden. Hierzu kann ein Zeilensensor beispielsweise senkrecht in der Zeichenebene zur Produktstromrichtung B unterhalb der Produktkette 1 und die Röntgenquelle oberhalb der Produktkette 1 stationär angeordnet sein, so dass die Produktkette von ihrem Anfang 51 bis Ende 53 vollständig in Grauwerten abhängig von der jeweiligen Längsposition erfasst wird. Selbstverständlich ist es auch denkbar, die Produktkette mittels eines geeigneten Sensors (Kamera, Großfilm, etc.) insgesamt auf einmal zu erfassen und einzelne Grauwerte pro Längsposition und/oder Fläche aus dem Gesamtbild zu gewinnen (Auslesen mittels geeigneter Bildverarbeitung). Aus den gewonnenen Grauwerten der Produktkette 1 kann mittels Aufsummieren oder Integrieren ein Grauwert$_{Gesamtbrutto}$ für die gesamte Produktkette 1 ermittelt werden.

Weiterhin wird die Produktkette 1 mittels einer in der Zeichnung nicht näher dargestellten Wägeeinrichtung insgesamt gewogen und damit das Gewicht der Produktkette (Gewicht$_{Gesamtbrutto}$) ermittelt.

Um eine röntgentechnische, im Unterschied zu einem Produkt 3a-3e eventuell nur schwer detektierbare Trennung, insbesondere Siegelnaht 41, 43, 45, 47 zwischen den einzelnen Verpackungen 4a-4e, in Näherung und ausreichender Weise zu definieren, können stattdessen die gewonnen Grauwerte diesbezüglich analysiert werden. So ist es beispielsweise denkbar, Maxima von Grauwerten in Abhängigkeit von deren Längsposition (in Richtung B) in der Produktkette 1 zu ermitteln. Derartige Maxima stehen für einen Punkt innerhalb des Bereiches, in welchem sich ein Produkt innerhalb der Verpackung 4a-4e befindet, wobei dieser Grauwert in jedem Fall Ober- und Unterseite der Verpackung inklusive dem Produkt 3a-3e enthält.

Zur Definition einer Trennung 41, 43, 45, 47 kann ein Abstand zwischen zwei benachbarten Maxima ermittelt und dieser halbiert werden. Fig. 1 zeigt beispielsweise einen ermittelten (ausgewerteten) Abstand A zwischen den (Grauwert-)Maxima 5d und 5e, so dass an der Position der Abstandsmitte A/2 die Siegelnaht 47 definiert wurde. Entsprechend sind die Siegelnähte 41, 43, und 45 als hälftiger Abstand zwischen den benachbarten (Grauwert-)Maxima 5a und 5b, 5b und 5c, 5c und 5d definiert.

Selbstverständlich ist es auch denkbar, die Siegelnähte 41, 43, 45, 47 auf andere Art zu definieren, beispielsweise über eine Analyse der Grauwerte hinsichtlich eines Produktbereichs und eine Definition der Siegelnähte 41, 43, 45, 47 außerhalb benachbarter Produktbereiche, beispielsweise mittels Halbieren ihrer Entfernung. Wie im Folgenden gezeigt wird, ist eine Bestimmung der tatsächlichen Position einer Siegelnaht 41, 43, 45, 47 für die Ermittlung einer möglichst exakten Nettofüllmenge, insbesondere Nettogewichts (Gewicht$_{Netto}$), nicht entscheidend oder gar erforderlich. Eine unerwünschte fehlerhafte Definition einer Position einer Siegelnaht 41, 43, 45, 47 innerhalb eines tatsächlichen Produktbereiches kann hierbei auf einfache Weise weitestgehend vermieden werden, oder mittels einer Kausalprüfung (beispielsweise Grauwertstufe, welche hierfür nicht überschritten werden darf) ausgeschlossen werden.

Entsprechend werden über die Länge $L_p$ der Produktkette 1 Abschnitte mit den jeweiligen Längen $L_a$, $L_b$, $L_c$, $L_d$ und $L_e$ definiert. Wie aus Fig. 1 ersichtlich, können die Abschnittsenden auf die Mitte einer tatsächlichen Siegelnaht, wie beispielsweise im Fall der Siegelnähte 41 und 45, fallen.

Der Anfang 51 oder das Ende 53 der Produktkette ist dagegen über Auswertung der Grauwerte einer Produktkette 1 in der Regel röntgentechnisch auf einfache Art und Weise exakt zu detektieren (erster bzw. letzter Grauwert), wobei aufgrund fehlender Grauwerte außerhalb der Produktkette auch eine Verschiebung diesbezüglich definierter Grenzen für die Ermittlung einer möglichst exakten Nettofüllmenge, insbesondere Nettogewichts (Gewicht$_{Netto}$), nicht erforderlich ist.

Über die auf diese Weise unterteilten einzelnen Verpackungen bzw. Verpackungsabschnitte bzw. Produktbereiche 4a-4e können über deren jeweilige Länge $L_a$, $L_b$, $L_c$, $L_d$ und $L_e$ Grauwerte, beispielsweise durch Aufsummieren oder Integrieren der gewonnenen Grauwerte, für diese Bereiche ermittelt werden. Demzufolge liegt für jeden Abschnitt ein Grauwert für die jeweilige Einzelverpackung mit dem jeweils darin enthaltenen Produkt Grauwert$_{Brutto}$ vor. Um die Verpackung, insbesondere Folie, mitzuerfassen, wird die Röntgeneinrichtung hierfür entsprechend genau justiert.

Im Weiteren wird innerhalb eines jeweiligen Abschnittes bzw. Produktbereichs der Länge (und Position) $L_a$, $L_b$, $L_c$, $L_d$ und $L_e$ wenigstens eine Unterregion (TARA-Region) vorgegeben oder definiert, welche innerhalb des Verpackungsbereiches bzw. innerhalb des Bereiches der Produktkette 1 liegt, in welchem sich jedoch kein Produkt 5a-5e befindet. Beispiele hierfür sind in Fig. 1 durch TARA-Regionen 7, 9, 11, 13, 15, 17, 19, 21, 23 in unterschiedlichen Positionen und Erstreckungen angegeben. Hierbei sind die in Lage und Abmessung sehr unterschiedlichen Produkte 3a-3e nur zur Verdeutlichung unterschiedlicher Lagen von TARA-Regionen zu verstehen, da Lage und Bereich der Produkte 3a-3e innerhalb der jeweiligen Verpackungsabschnitte üblicherweise bei Produktketten 1 in geringerem Maße voneinander abweichen.

Derartige Zonen können anhand von Erfahrungswerten vordefiniert sein oder auch in Abhängigkeit der gewonnen Grauwerte für eine Produktkette in Anwendung entsprechender Algorithmen (Bildauswertung) definiert werden. Beispielsweise können Bereiche mit im Wesentlichen konstantem Grauwert als TARA-Region definiert werden.

Da der Schlauchbeutel bzw. die Produktkette 1 aus einer übereinandergeschlagenen Folie gebildet ist, wird nicht nur die Produkt-Region, sondern der gesamte Beutel von zwei Folien (Ober- und Unterfolie) umhüllt, welche sich ggf. an der Stoßstelle über die gesamte Länge hin überlappen. Um bei Bedarf den überlappten Folienabschnitt besser zu berücksichtigen, ist es möglicherweise vorteilhaft, die TARA-Region quer zur Längsrichtung anzuordnen, so dass die Überlappung (zumeist an der Mittellinie) mit erfasst wird, bevorzugt sogar über die gesamte Breite. Eventuell kann die TARA-Region auch genau in eine Siegelnaht-Region gelegt werden.

Eine TARA-Region kann jedoch auch bereichsweise (benachbarte Verpackungsabschnitte) übergreifend definiert werden, ohne die Ermittlung einer möglichst exakten Nettofüllmenge, insbesondere Nettogewichts (Gewicht$_{ProduktbereichNetto}$), nachteilig zu beeinflussen. Hierzu kann beispielsweise die ermittelte Position einer Siegelnaht verwendet werden und eine TARA-Region in diesem Bereich oder über diesen in einem vorgegeben Maß hinausragend definiert werden. Selbstverständlich ist es auch denkbar, Grenzen für ein Ende und einen Anfang benachbarter Produktbereiche wie vorstehend erläutert zu ermitteln und eine TARA-Region 25 in dem Zwischenbereich - zwischen den Produkten 3d und 3e die Produktbereiche bzw. Verpackungsabschnitte 4d und 4e übergreifend - zu definieren.

Für die jeweilige TARA-Region wird in Abhängigkeit deren Erstreckung (Länge und/oder Fläche) ein Grauwert ermittelt und auf den jeweiligen Abschnitt bzw. Produktbereich 4a-4e mit der Länge $L_a$, $L_b$, $L_c$, $L_d$ und $L_e$ hochgerechnet. Auf diese Weise kann ein Grauwert der Verpackung ohne Produkt (Grauwert$_{TARA}$) ermittelt werden.

Aus diesem Grauwert$_{TARA}$ und den bereits ermittelten bzw. vorliegenden Werten Grauwert$_{Gesamtbrutto}$ und Gewicht$_{Gesamtbrutto}$ kann gemäß nachfolgender Gleichung das jeweilige Gewicht eines Verpackungsabschnittes ohne Produkt Gewicht$_{TARA}$ ermittelt werden.

$$Gewicht_{TARA} = \frac{Grauwert_{TARA}}{Grauwert_{Gesamtbrutto}} \times Gewicht_{Gesamtbrutto}$$

Aus den bereits ermittelten bzw. vorliegenden Werten Grauwert$_{ProduktbereichBrutto}$, Grauwert$_{Gesamtbrutto}$ und Gewicht$_{Gesamtbrutto}$ kann gemäß nachfolgender Gleichung das jeweilige Gewicht eines Verpackungsabschnittes mit Produkt Gewicht$_{ProduktbereichBrutto}$ ermittelt werden.

$$Gewicht_{ProduktbereichBrutto} = \frac{Grauwert_{ProduktbereichBrutto}}{Grauwert_{Gesamtbrutto}} \times Gewicht_{Gesamtbrutto}$$

Aus den beiden derart gewonnen Werten kann damit das Nettogewicht Gewicht$_{Netto}$ bzw. Gewicht$_{ProduktbereichNetto}$ eines in einem Verpackungsabschnitt enthaltenen Produkts wie folgt berechnet werden:

$$Gewicht_{Netto} = Gewicht_{ProduktbereichBrutto} - Gewicht_{TARA}$$
$$= \frac{Grauwert_{ProduktbereichBrutto}}{Grauwert_{Gesamtbrutto}} \times Gewicht_{Gesamtbrutto} - \frac{Grauwert_{TARA}}{Grauwert_{Gesamtbrutto}} \times Gewicht_{Gesamtbrutto}$$
$$= \frac{Gewicht_{Gesamtbrutto}}{Grauwert_{Gesamtbrutto}} \times (Grauwert_{ProduktbereichBrutto} - Grauwert_{TARA})$$

Aus diesem Nettogewicht Gewicht$_{Netto}$ bzw. Gewicht$_{ProduktbereichNetto}$ lassen sich auf einfache Weise auch andere Arten einer Nettofüllmenge bestimmen. Beispielsweise könnte bei einem flüssigen Produkt ein Nettovolumen durch Multiplikation des ermittelten Nettogewichts Gewicht$_{Netto}$ mit einer für die Flüssigkeit bekannten Dichte ermittelt werden.

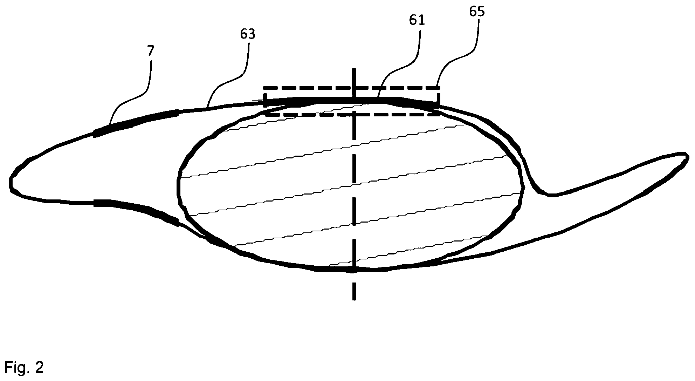

Wie aus Fig. 2 ersichtlich, befindet sich das Produkt 3a innerhalb des Verpackungsabschnittes 4a mit einer entsprechenden Ausdehnung (Dicke) mittig unterhalb des Falzes 61 bzw. der Überlappung der umgeschlagenen Folie 63. In dem - in Fig. 2 gestrichelt dargestellten - (Falz-)Bereich 65 liegt die Folie 63 daher infolge der Überlappung in nahezu doppelter Materialdichte vor.

Die vom Produkt 3a nicht gefüllten linksseitigen und rechtsseitigen Bereiche der Verpackung können je nach Anwendung mit Luft oder Schutzgas gefüllt sein oder ein Vakuum aufweisen.

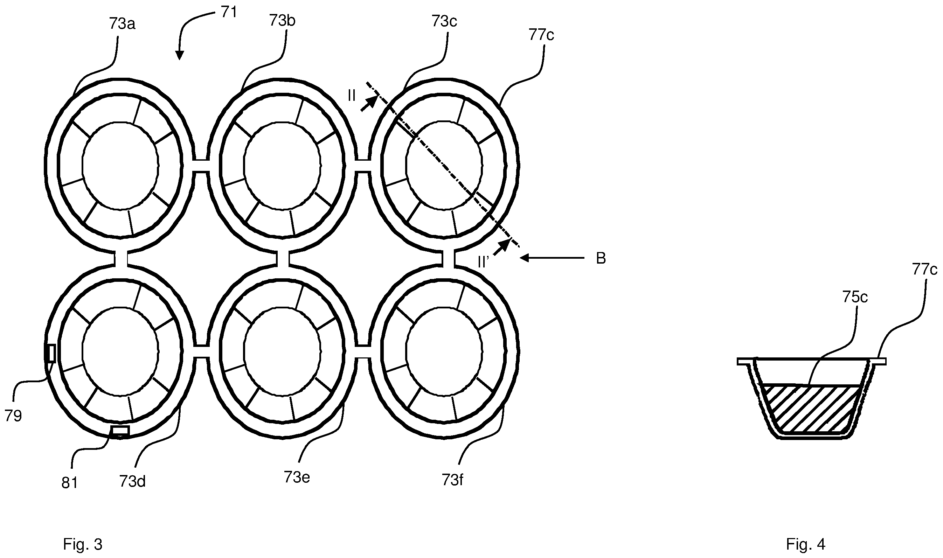

Das in Fig. 3 und Fig. 4 dargestellte zweite Ausführungsbeispiel zeigt die Anwendung des erfinderischen Verfahrens auf eine andere Art einer Produktkette, nämlich einer Becherkette 71, beispielsweise ein Sechserpack Joghurt, in der Form eines 3x2-Arrays.

Diese Becherkette 71 weist zwei nebeneinander angeordnete Spuren bzw. Spalten (Becher 73a-c und 73d-f) und drei nacheinander angeordnete Zeilen (Becher 73a,d; 73b,e und 73 c,f) in Richtung Produktstrom B auf. Hierbei sind die Becher 73a-73f ebenso wie die Verpackungsabschnitte im vorstehend erläuterten Ausführungsbeispiel nicht separiert, sondern miteinander verbunden (mechanisch gekoppelt).

Für die bereits gefüllten und eventuell bereits verschlossenen Becher 73a-73f ist es aufgrund der mechanischen Verbindung ebenso schwer bzw. nicht möglich, auf einfache und schnelle Art die Nettofüllmenge einzelnen Bechers zu bestimmen, wie im Falle des vorstehend erläuterten Beispiels eines Schlauchbeutelstranges bzw. einer Produktkette 1.

Die vorstehenden Ausführungen für das erste Ausführungsbeispiel finden hierbei ebenso Anwendung, nur mit dem Unterschied, dass die Produktkette 1 durch ein zweispuriges bzw. zweispaltiges Becherarray 71 ersetzt ist. Da die Becher 73a-73f mittels Tiefziehen gefertigt werden, kann mittels einer innerhalb des umlaufenden Becherrandes 77a-f angeordneten (vordefiniert oder mittels Auswertung festgelegten) TARA-Region ebenso, wie im ersten Ausführungsbeispiel erläutert, ein Nettovolumen bestimmt werden. Auch die Unterscheidung von Produktbereich und Bereich ohne Produkt, sowie Definition von Unterteilungen kann in der bereits geschilderten Weise erfolgen.

Allerdings kann bei einer etwas genaueren definierten Form (aufgrund des Tiefziehvorgangs) der Verpackung auf einfache Weise eine TARA-Region vorgegeben werden, da Position und Abmessung der Randbereiche 77a-77f nur geringste Abweichungen besitzen und TARA-Regionen, beispielsweise die Regionen 79, 81 in einem Randbereich 77c, exakt vorgegeben sein können.

Dagegen sind die Siegelnähte 29, 31, 33, 35 sowie Anfang 51 und Ende 53 aufgrund der Produktion eines Schlauchbeutels größeren Abweichungen unterworfen (Siegelnaht ungenau, verformt, schräg, etc.), so dass die Festlegung einer TARA-Region in dieser Ausführungsform vorzugsweise mittels Auswertung der Grauwerte und nachfolgender Definition (Festlegung) mit eventueller Kausalitätsprüfung vorteilhaft sein kann.

Ein ermittelter Grauwert für eine TARA-Region (pro Länge oder Fläche) kann auf einfache Weise (aus dem Verhältnis Länge TARA-Region zu Verpackungslänge oder Fläche TARA-Region zu Verpackungsfläche) auf einen TARA-Wert (Grauwert$_{TARA}$) der Verpackung hochgerechnet werden, da der Abstand von Produkttrennung (Siegelnaht, Unterteilung, etc.) als Länge der Verpackung sowie die Breite des Verpackungsmaterials, insbesondere vor Verarbeitung (Folienbreite vor einer Schlauchbildung oder einem Tiefziehvorgang) bekannt sind. In den bevorzugten Ausgestaltungen der Erfindung wird also an mindestens einer TARA-Position, an der nur der reine Folienanteil vorliegt (TARA-Region), der Grauwert für das TARA-Folienmaterial bestimmt. Dies kann für eine bekannte Länge oder Fläche erfolgen, so dass anschließend das TARA für die gesamte Beutellänge exakt berechnet werden kann.

Dieser Vorgang läuft vorteilhafterweise automatisch, schnell und mit hoher Exaktheit (beispielsweise mit einer Genauigkeit von 0,1g) ab. Ein Einlernen und eine periodische Überprüfung eines Referenzwertes (Ref$_{Tara}$, Ref$_{Brutto}$) sind daher nicht unbedingt erforderlich. Das TARA wird für jeden Beutel einer Verpackungskette oder eines Arrays individuell aus den Grauwerten bestimmt. Hierbei können TARA-Schwankungen durch Änderungen der Foliendicke oder der Verpackungsgeometrie automatischerkannt und/oder korrigiert werden. Das TARA wird für jeden Beutel der Kette individuell aus den Grauwerten bestimmt.

Eine derartige Ermittlung des TARA pro Verpackung und dessen Berücksichtigung bei der Ermittlung eines Produktrein- bzw. Nettogewichts ist wesentlich genauer als das Verwenden eines stichprobenartig ermittelten mittleren TARA-Wertes.

Für die in Fig. 5 und 6 dargestellten Ablaufpläne Variante" Beutel" und Variante "Kette" gilt, dass die unterschiedlichen vorstehend erläuterten Schritte zur Ermittlung einer Nettofüllmenge bzw. eines Nettogewichts nicht in einer festen zeitlichen Abfolge erfolgen müssen. Vielmehr können unterschiedliche Schritte zu unterschiedlichen Zeitpunkten vor- oder auch nacheinander erfolgen. Zudem wird aus den Ablaufdiagrammen nach Fig. 5 und Fig. 6 ersichtlich, dass auch eine unterschiedliche (in Anspruch 1 als Alternativen beanspruchte) Methodik zur Erreichung ein und desselben Ziels verwendet werden kann.

Die beiden Ablaufdiagramme sind der Einfachheit halber für das Beispiel von Einkammerbeuteln ausgeführt, welche in Form einer zusammenhängenden, insbesondere einspaltigen Kette miteinander zu einer Produktkette verbunden sind. Selbstverständlich können die dargestellten Abläufe auch auf Mehrkammerbecher oder Beutel übertragen werden, wobei der in den Ablaufdiagrammen verwendeten Begriff "Beutel" mit dem Begriff "Produktbereich" zu ersetzen ist.

Entsprechend werden in den Diagrammen (Fig. 5 und Fig. 6) folgende Begrifflichkeiten verwendet:

Grauwert$_{BeutelBrutto}$ anstelle Grauwert$_{ProduktbereichBrutto}$
Gewicht$_{BeutelNetto}$ anstelle Gewicht$_{ProduktbereichNetto}$
Gewicht$_{BeutelTARA}$ anstelle Gewicht$_{TARA}$
Gewicht$_{BeutelBrutto}$ anstelle Gewicht$_{produktbereichBrutto}$
Gewicht$_{KetteNetto}$ anstelle Gewicht$_{GesamtNetto}$

Im Wesentlichen unterscheiden sich die Abläufe nach Fig. 5 und Fig. 6 dadurch, dass in der Variante Beutel (Fig. 5) zu einem früheren Zeitpunkt ein $Grauwert_{BeutelBrutto}$ bzw. $Grauwert_{ProduktbereichBrutto}$ ermittelt wird und das $Gewicht_{BeutelNetto}$ bzw. $Gewicht_{Produktbereich-Netto}$ aus der Differenz des $Gewichts_{BeutelBrutto}$ und $Gewicht_{BeutelTARA}$ bzw. $Gewicht_{TARA}$ ermittelt wird. Hierzu wird das $Gewicht_{BeutelTARA}$ entweder näherungsweise als Null angenommen (bei voraussichtlich sehr kleinem Gewicht gegenüber $Gewicht_{BeutelBrutto}$) oder in angegebener Weise ermittelt.

Dagegen wird in der Variante "Kette" (Fig. 6), wie dargestellt, näherungsweise oder durch Ermittlung des TARA-Gewichts der Kette das Nettogewicht der Kette $Gewicht_{Ket-teNetto}$ bzw. $Gewicht_{GesamtNetto}$ ermittelt. Als abschließender Schritt wird dieses Gewicht $Gewicht_{GesamtNetto}$ entsprechend der Grauwertanteile der einzelnen Beutel bzw. Produktbereiche aufgeteilt und hieraus das Gewicht $Gewicht_{BeutelNetto}$ bzw. $Gewicht_{Netto}$ ermittelt.

In beiden Ablaufplänen wird im rechten Zweig die Möglichkeit dargestellt, dass bei einer Nichteinhaltung eines Kontrollwerts für die TARA-Region $K_{RegionTARA}$ gegenüber einem vorher ermittelten Kontrollwert $K_{TARA}$ eine Warnung an einen Benutzer ausgegeben werden kann. Bei einer solchen Warnung ist es beispielsweise möglich, einen Korrekturwert Korr in Abhängigkeit der Abweichung zu bestimmen und - wie vorstehend erläutert - einzusetzen (beispielsweise zur Genauigkeitsverbesserung).

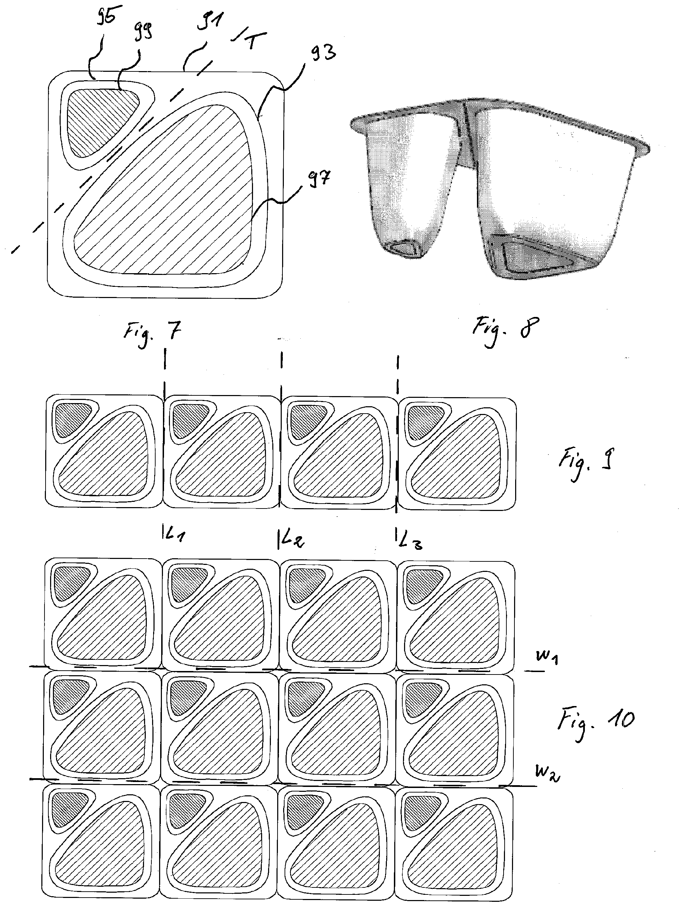

Der in Fig. 7 dargestellte Mehrkammerbecher 91 umfasst, wie im Beispiel dargestellt, zwei voneinander separierte Produktbereiche 93 und 95. Im Produktbereich 93 befindet sich beispielsweise als Produkt 97 eine gewünschte Menge an Joghurt, wohingegen sich hiervon separiert im Bereich 95 als Produkt 99 beispielsweise Zerealien, Fruchtzubereitung oder Ähnliches befinden. Der Mehrkammerbecher 91 muss demzufolge in seinen unterschiedlichen Produktbereichen 93 und 95 mit unterschiedlichen Produkten 97 und 99 sowohl in Art als auch in unterschiedlicher Menge befüllt werden. Mittels des erfindungsgemäßen Verfahrens ist es nunmehr nicht nur vor Aufbringen einer Deckfolie, sondern selbst nach Aufbringen einer solchen möglich, nicht nur die Menge, sondern auch die Art (aufgrund unterschiedlicher Dichte, welche sich entsprechend in den Grauwerten niederschlägt) zu überprüfen und die Abfüllproduktionsanlage mittels einer Steuereinrichtung entsprechend zu steuern.

Durch das Vorhandensein von mehreren, nämlich im Beispiel gezeigten zwei Produktbereichen innerhalb eines Bechers 91 kann dieser Becher 91 erfindungsgemäß als Produktkette angesehen werden.

Selbstverständlich können derartige Mehrkammerbecher, wie in Fig. 7 und perspektivisch in Fig. 8 dargestellt, auch in Form einer einspaltigen Produktkette wie in Fig. 9 dargestellt, also mit mehreren, beispielsweise vier zusammenhängenden Bechern vorliegen.

Überdies ist es aber auch, wie in Fig. 10 dargestellt, denkbar, dass derartige Mehrkammerbecher 91 ebenso wie Einkammerbecher oder Beutel als Array oder Matrix (mit mehreren Spalten und mehreren Zeilen) vorliegen. Wie in Fig. 10 dargestellt, kann eine solche Matrix beispielsweise aus drei Spalten und vier Reihen, also 12 Mehrkammerbechern 91 bestehen.

Um die Produktbereiche innerhalb eines solchen Bechers (logisch) voneinander zu trennen, ist es beispielsweise möglich, während oder nachfolgend einer Bildmustererkennung (bzw. Bildverarbeitung) eine gerade schräge Trennlinie T zwischen den beiden Produktbereichen 93 und 95 zu definieren. Selbstverständlich ist es aber auch möglich, die Produktbereiche, insbesondere über eine Bildauswertung eines Gesamtgrauwertbildes direkt, beispielsweise in Form einer umlaufenden Linie bzw. Hülllkurve 93 und 95, zu bestimmen.

Im Falle einer einspaltigen Produktkette, wie in Fig. 9 dargestellt, können zusätzlich benachbarte Becher mittels einer geraden senkrechten Trennlinie $L_1$, $L_2$, $L_3$ per Bildauswertung oder Schwellwertanalyse der detektierten Grauwerte voneinander unterschieden werden.

Existieren, wie in Fig. 10 dargestellt, mehrere, wie beispielsweise drei Spalten, so können zusätzlich die Spalten wiederum mittels Bildauswertung bzw. Schwellwertanalyse der Grauwerte durch gerade, waagrechte Linien $W_1$ und $W_2$ (logisch bzw. für die Ermittlung der Füllgewichts oder der -menge) voneinander separiert werden. Selbstverständlich ist es auch hier, statt der vereinfachten Variante mit geraden (waagrechten, senkrechten oder schrägen) Trennlinien, möglich, mit Hüllkurven, jeweils einem Produktbereich oder mehrere Produktbereiche (beispielsweise zwei und damit einen Becher) als eine Einheit zu erfassen. In jedem Fall ist es auch bei Mehrkammerbechern 91, wie dargestellt, möglich, für jeden Produktbereich 93 und 95 sowie jeden einzelnen Becher 91 (ob in Alleinstellung, in einer einspaltigen Produktkette oder einem Array als Produktkette) Produktbereiche einzeln sowie vorzugsweise auch einen Becher als Einheit zu erfassen und das erfindungsgemäße Verfahren zur Bestimmung der Nettofüllmenge, insbesondere des Nettogewichts, auf diese Bereiche anzuwenden.

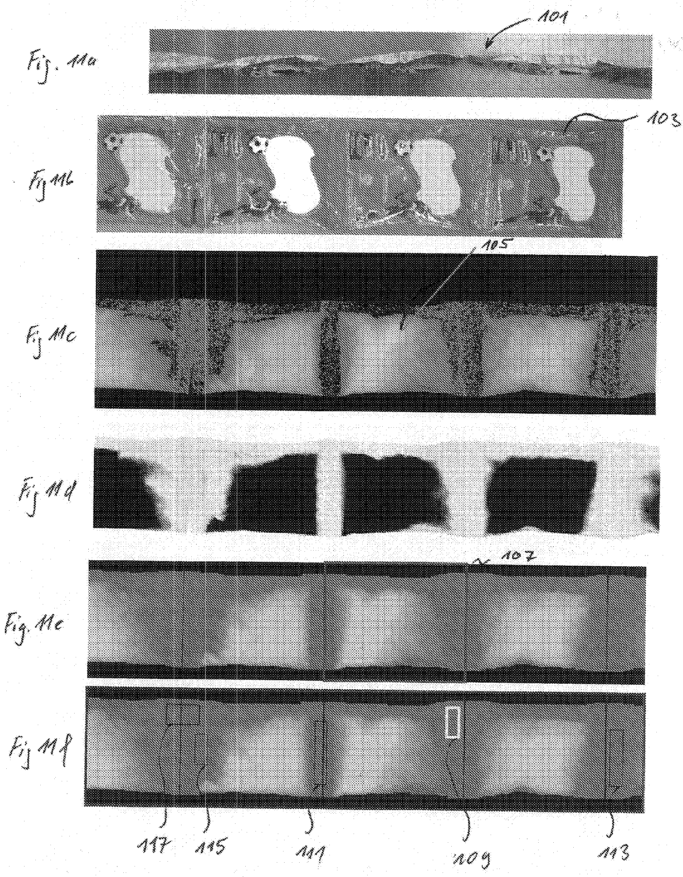

In Fig. 11a - 11f wird das erfindungsgemäße Verfahren anhand einer Beutelkette 101 mit mehreren voneinander separierten (unterteilten), jedoch zusammenhängenden Beuteln 103 dargestellt. Derartige Beutelketten 101 können eine kleinere Anzahl bis hin zu einer größeren beliebigen Anzahl, wie beispielsweise zwischen zwei, drei, vier, fünf, sechs bis zehn oder auch mehr, von Beuteln 103 umfassen.

Wie aus Fig. 11c ersichtlich, wird die Produktkette 101 in voller Breite (Draufsicht bzw. Grundriss) durchleuchtet, wobei ein typisches Grauwertbild wie in 11c dargestellt entsteht. Hierbei sind die in unterschiedlichen Formen mit dem gewünschten Produkt 105 (beispielsweise Pulver) gefüllten und voneinander separierten Bereiche bzw. Produktbereiche ersichtlich, wobei sich im Originalbild auch in den Bereichen ohne Produkt unterschiedliche Pixel bzw. Grauwertstufen zeigen. Diese aufgrund von Toleranzen und Fehlern, wie beispielsweise Rauschen, entstehenden Messfehler können vorzugsweise vor einer Weiterverarbeitung mittels Bildanalyse bzw. Bildauswertung korrigiert bzw. bereinigt werden, so dass ein in Fig. 11d dargestelltes bereinigtes Bild entsteht.

Unabhängig von der tatsächlichen oder inversen Darstellung können wie in Fig. 11e und 11f nun Produktbereiche 107 anhand von senkrechten (rot dargestellten) logischen Trennlinien (bei konstanter Breite) zwischen benachbarten Produkten definiert werden. Die Trennlinien (senkrechte Linien des Rechtecks 107) liegen innerhalb eines Bereiches ohne Produkt. Selbstverständlich können die Produktbereiche 107 auch, wie dargestellt, durch einen flächigen Bereich 107, beispielsweise rechteckig wie in Fig. 11e (als rote Umrandung dargestellt) oder als beliebige Hüllkurve um das Produkt 105 herum definiert werden.

Wie in Fig. 11f dargestellt, können Bereiche ohne Produkt, beispielsweise als rechteckige Bereiche, als TARA-Regionen 109, 111, 113, 115 , 117 festgelegt werden, um später ein $Gewicht_{TARA}$, $Gewicht_{GesamtTARA}$ bis hin zu Kontrollwerten $K_{RegionTARA}$ (für TARA-Regionen), $K_{TARA}$ (für Abschnitte bzw. Produktbereiche) als auch Referenzwerte $Ref_{TARA}$ zu ermitteln.

Bezugszeichenliste

| | |
|---|---|
| 1 | Produktkette |
| 3a-e | Produkte |
| 4a-e | jeweils einzelne Verpackungen bzw. Verpackungsabschnitte |
| 5a-e | Maxima Grauwerte |
| 7,9,11,13,15,17,19,21,23 | TARA-Regionen |
| 25 | TARA-Region übergreifend |
| 27,29,31,33,35, 53 | tatsächliche Siegelnähte |
| 41,43,45,47 | definierte Siegelnähte (logische Trennlinien) |
| 51=27 | Anfang Produktkette (tatsächliche erste Siegelnaht) |
| 53 | Ende Produktkette (tatsächliche letzte Siegelnaht) |
| 61 | Falz |
| 63 | Folie (Schlauch) |
| 65 | Falzbereich (gestrichelt) |
| 71 | Becherkette bzw. Array von Bechern |
| 73a-f | Becher |
| 75c | Produkt |
| 77c | umlaufender Randbereich |
| 79,81 | TARA-Regionen |
| 91 | Mehrkammerbecher |
| 93 | Produktbereich mit Produkt 97 |
| 96 | Produktbereich mit Produkt 999 |
| 97 | Produkt |
| 99 | weiteres Produkt |
| 101 | Beutelkette |
| 103 | einzelner Beutel |
| 105 | Produkt innerhalb eines Beutels |
| 107 | Produktbereich |
| 109 | TARA-Regionen (vertikale) bzw. TARA-Bereich |
| 111 | übergreifende TARA-Regionen (vertikale) bzw. TARA-Bereich |
| 113 | TARA-Regionen (vertikale) bzw. TARA-Bereich |
| 115 | TARA-Regionen (vertikale) bzw. TARA-Bereich |
| 117 | übergreifende TARA-Regionen (horizontale) bzw. TARA-Bereich |
| A | Abstand zwischen 5d und 5e |
| A/2 | hälftiger Abstand für Definition 41,43,45,47 |
| B | Bewegungsrichtung der Produktkette |
| T | schräge, gerade Trennlinie zwischen Bereichen 93 und 95 |
| $L_1$-$L_3$ | senkrechte, gerade Trennlinien zwischen Bechern 91 |
| $W_1$, $W_2$ | waagrechte, gerade Trennlinien zwischen Spalten von Bechern 91 |
| $L_p$ | Produktkettenlänge |
| $L_a$-$L_e$ | definierte Länge der Verpackung |

| Term | Definition |
|---|---|
| I-I' | Schnittlinie |
| II-II' | Schnittlinie |
| $\text{Grauwert}_{\text{Gesamtbrutto}}$ | Grauwert für die gesamte Produktkette |
| $\text{Gewicht}_{\text{Gesamtbrutto}}$ | Gewicht der Produktkette |
| $\text{Gewicht}_{\text{ProduktbereichNetto}}$ | Nettogewicht eines Produks (innerhalb eines Produktbereiches ohne Verpackung bzw. Verpackungsmaterial |
| $\text{Grauwert}_{\text{ProduktbereichBrutto}}$ | Grauwert eines Produktbereichs mit Produkt und Verpackung |
| $\text{Gewicht}_{\text{produktbereichBrutto}}$ | Gewicht eines Produktbereichs mit Produkt und Verpackung |
| $\text{Grauwert}_{\text{TARA}}$ | Grauwert des Produktbereiches ohne Produkt |
| $\text{Gewicht}_{\text{TARA}}$ | Gewicht eines Produktbereiches ohne Produkt, d.h. Gewicht der Verpackung |
| $\text{Gewicht}_{\text{GesamtTARA}}$ | TARA-Gewicht der gesamten Produktkette |
| $\text{Ref}_{\text{Brutto}}$ | Referenzwert der Produktkette ($\text{Ref}_{\text{Brutto}} = \text{Gewicht}_{\text{Gesamtbrutto}} / \text{Grauwert}_{\text{Gesamtbrutto}}$ |
| $\text{Gewicht}_{\text{GesamtNetto}}$ | Nettogewicht der Produktkette |
| $\text{Gewicht}_{\text{GesamtTARA}}$ | Gewicht der Produktkette ohne Produkt, d.h. Gesamtgewicht des Verpackungsmaterials einer Produktkette |
| $\text{Länge}_{\text{Produktbereich}}$ | Länge des Produktbereichs |
| $\text{Länge}_{\text{Gesamt}}$ | Länge der Produktkette |
| $\text{Fläche}_{\text{Gesamt}}$ | Fläche der Produktkette im Röntgenbild |
| TARA-Region | Unterregion der Produktkette ohne ein darin befindliches Produkt |
| $\text{Grauwert}_{\text{RegionTARA}}$ | Grauwert der TARA-Region |
| $\text{Fläche}_{\text{RegionTARA}}$ | Fläche der TARA-Region |
| $\text{Gewicht}_{\text{RegionTARA}}$ | Gewicht der TARA-Region |
| $\text{Ref}_{\text{TARA}}$ | Referenzwert eines Abschnitts bzw. Produktbereichs einer leeren Verpackung ($\text{Ref}_{\text{TARA}} = \text{Gewicht}_{\text{TARA}}/\text{Grauwert}_{\text{TARA}}$) |
| $\text{Grauwert}_{\text{ProduktbereichNormiert}}$ | Grauwerte des (normierten) Produktbereichs |
| $\text{Grauwert}_{\text{GesamtNormiert}}$ | berechnete Summe aller normierter Grauwerte der Produktkette |
| $K_{\text{RegionTARA}}$ | Kontrollwert für TARA-Region(en) |
| $K_{\text{TARA}}$ | Kontrollwert des Abschnitts bzw. Produktbereichs |
| Korr | Korrekturwert ($=K_{\text{RegionTARA}}/K_{\text{TARA}}$) |

**Patentansprüche**

1. Verfahren zur Ermittlung eines Nettogewichts ($\text{Gewicht}_{\text{ProduktbereichNetto}}$) eines in einem Produktbereich befindlichen verpackten Produktes (3a-3e), wobei mehrere zusammenhängende Produktbereiche ($L_a$-$L_e$) eine Produktkette (1) bilden, **dadurch gekennzeichnet. dass**

a) ein Gesamtgewicht ($\text{Gewicht}_{\text{Gesamtbrutto}}$) der Produktkette (1) ermittelt wird,

b) die Produktkette (1) mit einer Röntgeneinrichtung durchleuchtet wird, um Grauwerte zu ermitteln, die der Röntgenstrahlung entsprechen, welche jeweils einen definierten Bereich der Produktkette (1) durchdringt,

c) aus den ermittelten Grauwerten ein Gesamtgrauwert ($\text{Grauwert}_{\text{Gesamtbrutto}}$) für die gesamte Produktkette (1) ermittelt wird,

d) die zusammenhängenden Produktbereiche ($L_a$-$L_e$) mit einem einzelnen darin enthaltenen Produkt (3a-3e) durch Auswertung der ermittelten Grauwerte ausgewählt oder vorgegeben werden,

e) ein Grauwert ($\text{Grauwert}_{\text{ProduktbereichBrutto}}$) jedes Produktbereiches ($L_a$-$L_e$) aus den ermittelten Grauwerten gebildet wird, und entweder

f) hieraus ein Bruttogewicht ($\text{Gewicht}_{\text{ProduktbereichBrutto}}$) des Produktbereiches ($L_a$-$L_e$) ermittelt wird und

g) als Nettogewicht ($\text{Gewicht}_{\text{ProduktbereichNetto}}$) des einzelnen Produkts (3a-3e) näherungsweise das Bruttogewicht ( $\text{Gewicht}_{\text{ProduktbereichBrutto}}$) verwendet wird oder das Nettogewicht ($\text{Gewicht}_{\text{ProduktbereichNetto}}$) aus der Differenz des Bruttogewichts ( $\text{Gewicht}_{\text{ProduktbereichBrutto}}$) und einem vorgegebenen oder ermittelten Gewicht ($\text{Gewicht}_{\text{TARA}}$) des Produktbereiches ($L_a$-$L_e$) ohne Produkt (3a-3e) ermittelt wird, oder statt der Schritte f)-g)

g') als Nettogewicht ($\text{Gewicht}_{\text{GesamtNetto}}$) der Produktkette (1) näherungsweise das Gesamtgewicht ($\text{Gewicht}_{\text{GesamtBrutto}}$) verwendet wird oder das Nettogewicht ($\text{Gewicht}_{\text{GesamtNetto}}$) aus der Differenz des Gesamtgewichts ($\text{Gewicht}_{\text{GesamtBrut-to}}$) und einem vorgegebenen oder ermittelten Gewicht ($\text{Gewicht}_{\text{GesamtTARA}}$) der Produktkette (1) ohne Produkt (3a-3e) ermittelt wird und

h) das Nettogewicht ($\text{Gewicht}_{\text{ProduktbereichNetto}}$) des einzelnen Produkts (3a-3e) durch Aufteilung des Nettogewichts ($\text{Gewicht}_{\text{GesamtNetto}}$) der Produktkette (1) entsprechend der Grauwerte ($\text{Grauwert}_{\text{ProduktbereichBrutto}}$)

der Produktbereiche ($L_a$-$L_e$) ermittelt wird.

2. Verfahren nach Anspruch 1, **dadurch gekennzeichnet, dass** zur Auswahl des Produktbereichs ($L_a$-$L_e$) eine Trennlinie (41, 43, 45, 47) zwischen einzelnen benachbarten Produktbereichen (5a-5e) oder eine Hüllkurve um ein einzelnes Produkt (3a-3e) durch Auswertung der ermittelten Grauwerte ermittelt wird.

3. Verfahren nach Anspruch 1 oder 2, **dadurch gekennzeichnet, dass**

   a) ein Gewicht pro Flächeneinheit (**Gewicht$_{TARA}$/L**) des Produktbereiches ($L_a$-$L_e$) ohne Produkt (3a-3e) vorbekannt ist oder ermittelt wird,
   b) das Gewicht (**Gewicht$_{TARA}$**) des Produktbereiches ($L_a$-$L_e$) ohne Produkt (3a-3e) durch Multiplikation von Gewicht pro Flächeneinheit ( **Gewicht$_{TARA}$/L**) und Fläche des Produktbereiches ($L_a$-$L_e$) ermittelt wird oder statt des Schrittes b)
   b') das Gewicht (**Gewicht$_{GesamtTARA}$**) der Produktkette (1) ohne Produkt (3a-3e) durch Multiplikation von Gewicht pro Flächeneinheit (**Gewicht$_{TARA}$/L** ) und Fläche der Produktkette (1) ermittelt wird.

4. Verfahren nach Anspruch 3, **dadurch gekennzeichnet, dass** das Gewicht pro Flächeneinheit (**Gewicht$_{TARA}$/L**) ermittelt wird, indem eine Unterregion (7, 9, 11, 13, 15, 17, 19, 21, 23, 25, 79, 81) ohne Produkt der Produktkette (1) vordefiniert oder aus den ermittelten Grauwerten ausgewählt wird und hierfür das Gewicht pro Flächeneinheit (**Gewicht$_{TARA}$/L**) aus einem Grauwert (Grauwert$_{TARA}$) ermittelt wird.

5. Verfahren nach Anspruch 4, **dadurch gekennzeichnet, dass** wenigstens zwei Unterregionen (7,9,11,13,15,17,19,21,23,25,79,81) der Produktkette (1) vordefiniert werden und aus deren Mittelwert das Gewicht pro Flächeneinheit (**Gewicht$_{TARA}$/L**) ermittelt wird.

6. Verfahren nach einem der vorhergehenden Ansprüche, **dadurch gekennzeichnet, dass** mehrere Produktketten (1) parallel nebeneinander verarbeitet werden.

7. Verfahren nach einem der vorhergehenden Ansprüche, **dadurch gekennzeichnet, dass** als Produktkette (1) ein Array (71) aus mehreren Zeilen und Spalten von Verpackungen (73a-73f) verarbeitet wird.

8. Verfahren nach einem der vorhergehenden Ansprüche, **dadurch gekennzeichnet**, das in Abhängigkeit des ermittelten Nettogewichts (**Gewicht$_{ProduktbereichNetto}$**) eine Einrichtung zum Befüllen überwacht, angesteuert oder geregelt wird.

9. Verfahren nach einem der vorhergehenden Ansprüche, **dadurch gekennzeichnet, dass** das Ermitteln des Nettogewichts (**Gewicht$_{ProduktbereichNetto}$**) während der Bewegung der Produktkette (1, 71), erfolgt.

10. Verfahren nach einem der vorhergehenden Ansprüche, **dadurch gekennzeichnet, dass** ein ermittelter Grauwert (Grauwert$_{Brutto}$, Grauwert$_{TARA}$) mit einem für einen jeweiligen Bereich vorgegebenen oder ermittelten Referenzwert (Ref$_{Brutto}$, Ref$_{TA-RA}$) oder Referenzbereich auf Gültigkeit überprüft wird.

11. Vorrichtung, die dazu ausgebildet ist, ein Verfahren nach einem der vorhergehenden Ansprüche durchzuführen, mit

   a) einer Waage, welche derart ausgebildet ist, um ein Gesamtgewicht ( **Gewicht$_{Gesamtbrut-to}$** einer Produktkette (1) mit den darin jeweils in einzelnen Produktbereichen ($L_a$-$L_e$) enthaltenen Produkten (3a-3e) zu ermitteln, **dadurch gekennzeichnet, dass**
   b) die Vorrichtung eine Röntgeneinrichtung umfasst, welche eine Ermittlung eines Grauwertes (**Grauwert$_{Gesamtbrutto}$**) für die gesamte Produktkette (1) ermöglicht,
   c) die Vorrichtung eine Auswerteeinrichtung zum Auswählen eines Produktbereichs ($L_a$-$L_e$) mit einem einzelnen darin enthaltenen Produkt (3a-3e) umfasst,
   d) die Auswerteeinrichtung derart ausgebildet ist, dass ein Grauwert (**Grauwert$_{ProduktbereichBrutto}$**) des Produktbereiches ($L_a$-$L_e$) mittels Durchleuchten ermittelt wird und
   e) die Auswerteeinrichtung derart ausgebildet ist, dass ein Nettogewicht **Gewicht$_{ProduktbereichNetto}$** des einzelnen Produkts (3a-3e) ermittelt wird.

12. Vorrichtung nach Anspruch 11, **dadurch gekennzeichnet, dass** die Röntgeneinrichtung derart ausgebildet ist, dass für wenigstens eine vordefinierte Unterregion (7,9,11,13,15,17,19,21,23,25,79,81,109) ohne Produkt der Produktkette (1) ein Grauwert (**Grauwert$_{TARA}$**) ermittelt wird.

**Claims**

1. Method for ascertaining a net weight (**Weight $_{Product\ Area\ Net}$**) of a packaged product (3a-3e) in a product area, wherein a plurality of contiguous product areas (L$_a$-L$_e$) form a product chain (1),
**characterized in that**

a) a total weight (**Weight $_{Total\ Gross}$**) of the product chain (1) is ascertained,
b) the product chain (1) is X-rayed using an X-ray device in order to ascertain greyscale values that correspond to the X-ray radiation that respectively penetrates a defined area of the product chain (1),
c) the ascertained greyscale values are used to ascertain a total greyscale value (**Greyscale Value $_{Total\ Gross}$**) for the entire product chain (1),
d) the contiguous product areas (L$_a$-L$_e$) with a single product (3a-3e) contained therein are selected or prescribed by means of evaluation of the ascertained greyscale values,
e) a greyscale value (**Greyscale Value $_{Product\ Area\ Gross}$**) of each product area (L$_a$-L$_e$) is formed from the ascertained greyscale values,
and either
f) a gross weight (**Weight $_{Product\ Area\ Gross}$**) of the product area (La-Le) is ascertained therefrom and
g) approximately the gross weight (**Weight $_{Product\ Area\ Gross}$**) is used as net weight (**Weight $_{Product\ Area\ Net}$**) of the single product (3a-3e) or the net weight (**Weight $_{Product\ Area\ Net}$**) is ascertained from the difference between the gross weight (**Weight $_{Product\ Area\ Gross}$**) and a prescribed or ascertained weight (**Weight $_{Tare}$**) of the product area (L$_a$-L$_e$) without a product (3a-3e),
or, instead of steps f)-g),
g') approximately the total weight (**Weight $_{Total\ Gross}$**) is used as net weight (**Weight $_{Total\ Net}$**) of the product chain (1) or the net weight (**Weight $_{Total\ Net}$**) is ascertained from the difference between the total weight (**Weight $_{Total\ Gross}$**) and a prescribed or ascertained weight (**Weight $_{Total\ Tare}$**) of the product chain (1) without a product (3a-3e) and
h) the net weight (**Weight $_{Product\ Area\ Net}$**) of the single product (3a-3e) is ascertained by dividing the net weight (**Weight $_{Total\ Net}$**) of the product chain (1) according to the greyscale values (**Greyscale Value $_{Product\ Area\ Gross}$**) of the product areas (L$_a$-L$_e$).

2. Method according to claim 1, **characterized in that** for the selection of the product area (L$_a$-L$_e$) a dividing line (41, 43, 45, 47) between individual neighbouring product areas (5a-5e) or an envelope around a single product (3a-3e) is ascertained by means of evaluation of the ascertained greyscale values.

3. Method according to claim 1 or 2, **characterized in that**

a) a weight per unit area (**Weight $_{Tare}$/L**) of the product area (L$_a$-L$_e$) without a product (3a-3e) is already known or is ascertained,
b) the weight (**Weight $_{Tare}$**) of the product area (L$_a$-L$_e$) without a product (3a-3e) is ascertained by multiplying the weight per unit area (**Weight $_{Tare}$/L**) and the surface area of the product area (L$_a$-L$_e$)
or, instead of step b),
b') the weight (**Weight $_{Total\ Tare}$**) of the product chain (1) without a product (3a-3e) is ascertained by multiplying the weight per unit area (**Weight $_{Tare}$/L**) and the surface area of the product chain (1).

4. Method according to claim 3, **characterized in that** the weight per unit area (**Weight $_{Tare}$/L**) is ascertained by predefining a sub-region (7, 9, 11, 13, 15, 17, 19, 21, 23, 25, 79, 81), without a product, of the product chain (1) or selecting one from the ascertained greyscale values and ascertaining the weight per unit area (**Weight $_{Tare}$/L**) for this from a greyscale value (Greyscale Value $_{Tare}$).

5. Method according to claim 4, **characterized in that** at least two sub-regions (7, 9, 11, 13, 15, 17, 19, 21, 23, 25, 79, 81) of the product chain (1) are predefined and the weight per unit area (**Weight $_{Tare}$/L**) is ascertained from the average thereof.

6. Method according to one of the preceding claims, **characterized in that** several product chains (1) are processed next to each other in parallel.

**7.** Method according to one of the preceding claims, **characterized in that** an array (71) of several rows and columns of packages (73a-73f) is processed as a product chain (1).

**8.** Method according to one of the preceding claims, **characterized in that** a filling device is monitored, actuated or controlled depending on the ascertained net weight **(Weight $_{\text{Product Area Net}}$)**.

**9.** Method according to one of the preceding claims, **characterized in that** the net weight **(Weight $_{\text{Product Area Net}}$)** is ascertained while the product chain (1, 71) is moving.

**10.** Method according to one of the preceding claims, **characterized in that** an ascertained greyscale value (Greyscale Value$_{\text{Gross}}$, Greyscale Value$_{\text{Tare}}$) is checked for validity with a reference value (Ref$_{\text{Gross}}$, Ref$_{\text{Tare}}$) or reference range prescribed or ascertained for a respective area.

**11.** Device which is designed to carry out a method according to one of the preceding claims, having

a) a weighing machine which is designed so as to ascertain a total weight **(Weight $_{\text{Total Gross}}$)** of a product chain (1) with the products (3a-3e) contained therein respectively in individual product areas (L$_a$-L$_e$), **characterized in that** b) the device comprises an X-ray device which makes it possible to ascertain a greyscale value **(Greyscale Value $_{\text{Total Gross}}$)** for the entire product chain (1), c) the device comprises an evaluation device for selecting a product area (L$_a$-L$_e$) with a single product (3a-3e) contained therein, d) the evaluation device is designed such that a greyscale value **(Greyscale Value $_{\text{Product Area Gross}}$)** of the product area (L$_a$-L$_e$) is ascertained by means of X-raying and e) the evaluation device is designed such that a net weight **(Weight $_{\text{Product Area Net}}$)** of the single product (3a-3e) is ascertained.

**12.** Device according to claim 11, **characterized in that** the X-ray device is designed such that a greyscale value **(Greyscale Value $_{\text{Tare}}$)** is ascertained for at least one predefined sub-region (7, 9, 11, 13, 15, 17, 19, 21, 23, 25, 79, 81, 109), without a product, of the product chain (1).

**Revendications**

**1.** Procédé de détermination d'un poids net **(poids$_{\text{zoneproduitnet}}$)** d'un produit emballé (3a-3e) situé dans une zone de produit, plusieurs zones de produit contiguës (L$_a$-L$_e$) formant une chaîne de produit (1), **caractérisé en ce que**

a) un poids total **(poids$_{\text{totalbrut}}$)** de la chaîne de produit (1) est déterminé, b) la chaîne de produit (1) est radiographiée au moyen d'un dispositif à rayons X afin de déterminer les niveaux de gris qui correspondent au rayonnement X, lequel pénètre respectivement dans une zone définie de la chaîne de produit (1), c) un niveau de gris total **(niveau de gris$_{\text{totalbrut}}$)** pour l'ensemble de la chaîne de produit (1) est déterminé à partir des niveaux de gris déterminés, d) les zones de produits contiguës (L$_a$-L$_e$) contenant un produit individuel (3a-3e) sont sélectionnées ou spécifiées en évaluant les niveaux de gris déterminés, e) un niveau de gris **(niveau de gris$_{\text{zoneproduitbrut}}$)** de chaque zone de produit (L$_a$-L$_e$) est formé à partir des niveaux de gris déterminés, et soit f) un poids brut **(poids$_{\text{zoneproduitbrut}}$)** de la zone de produit (L$_a$-L$_e$) en est déterminé et g) le poids brut **(poids$_{\text{zoneproduitbrut}}$)** est utilisé approximativement pour le poids net **(poids$_{\text{zoneproduitnet}}$)** du produit individuel (3a-3e) ou le poids net **(poids$_{\text{zoneproduitnet}}$)** est déterminé à partir de la différence entre le poids brut **(poids$_{\text{zoneproduitbrut}}$)** et un poids spécifié ou déterminé **(poids$_{\text{TARE}}$)** de la zone de produit (L$_a$-L$_e$) sans produit (3a-3e), soit, au lieu des étapes f)-g), g') le poids total **(poids$_{\text{totalbrut}}$)** est approximativement utilisé pour le poids net **(poids$_{\text{totalnet}}$)** de la chaîne de produit (1) ou le poids net **(poids$_{\text{totalnet}}$)** est déterminé à partir de la différence entre le poids total **(poids$_{\text{totalbrut}}$)** et un poids spécifié ou déterminé **(poids$_{\text{totalTARE}}$)** de la chaîne de produit (1) sans produit (3a-3e) et h) le poids net **(poids$_{\text{zoneproduitnet}}$)** du produit individuel (3a-3e) est déterminé en divisant le poids net

(poids$_{totalnet}$) de la chaîne de produit (1) selon les niveaux de gris (niveau de gris$_{zoneproduitbrut}$) des zones de produit (L$_a$-L$_e$).

2. Procédé selon la revendication 1, **caractérisé en ce que** pour la sélection de la zone de produit (L$_a$-L$_e$), une ligne de séparation (41, 43, 45, 47) entre des zones de produit adjacentes individuelles (5a-5e) ou une courbe d'enveloppe autour d'un produit individuel (3a-3e) est déterminée en évaluant les niveaux de gris déterminés.

3. Procédé selon la revendication 1 ou 2, **caractérisé en ce que**

a) un poids par unité de surface (poids$_{TARE}$/L) de la zone de produit (L$_a$-L$_e$) sans produit (3a-3e) est préconnu ou est déterminé,
b) le poids (poids$_{TARE}$) de la zone de produit (L$_a$-L$_e$) sans produit (3a-3e) est déterminé en multipliant le poids par unité de surface (poids$_{TARE}$/L) et la surface de la zone de produit (L$_a$-L$_e$) ou, au lieu de l'étape b),
b') le poids (poids$_{TAREtotal}$) de la chaîne de produit (1) sans produit (3a-3e) est déterminé en multipliant le poids par unité de surface (poids$_{TARE}$/L) et la surface de la chaîne de produit (1).

4. Procédé selon la revendication 3, **caractérisé en ce que** le poids par unité de surface (poids$_{TARE}$/L) est déterminé en prédéfinissant une sous-région (7, 9, 11, 13, 15, 17, 19, 21, 23, 25, 79, 81) sans produit de la chaîne de produit (1) ou en la sélectionnant parmi les niveaux de gris déterminés et **en ce que** le poids par unité de surface (poids$_{TARE}$/L) est ainsi déterminé à partir d'un niveau de gris (niveau de gris$_{TARE}$).

5. Procédé selon la revendication 4, **caractérisé en ce qu'**au moins deux sous-régions (7, 9, 11, 13, 15, 17, 19, 21, 23, 25, 79, 81) de la chaîne de produit (1) sont prédéfinies et que le poids par unité de surface (poids$_{TARE}$/L) est déterminé à partir de leur valeur moyenne.

6. Procédé selon l'une des revendications précédentes, **caractérisé en ce que** plusieurs chaînes de produit (1) sont traitées en parallèle les unes à côté des autres.

7. Procédé selon l'une des revendications précédentes, **caractérisé en ce qu'**un réseau (71) constitué de plusieurs rangées et de colonnes d'emballages (73a-73f) est traité en tant que chaîne de produit (1).

8. Procédé selon l'une des revendications précédentes, **caractérisé en ce qu'**un dispositif de remplissage est surveillé, commandé ou réglé en fonction du poids net déterminé (poids$_{zoneproduitnet}$).

9. Procédé selon l'une des revendications précédentes, **caractérisé en ce que** la détermination du poids net (poids$_{zoneproduitnet}$) a lieu pendant le déplacement de la chaîne de produit (1, 71).

10. Procédé selon l'une des revendications précédentes, **caractérisé en ce que** la validité d'un niveau de gris déterminé (niveau de gris$_{brut}$, niveau de gris$_{TARE}$) est vérifiée au moyen d'une valeur de référence (Ref$_{brut}$, Ref$_{TARE}$) ou d'une zone de référence spécifiées ou déterminées pour une zone respective.

11. Système conçu pour exécuter un procédé selon l'une des revendications précédentes, comportant

a) une balance qui est conçue pour déterminer un poids total (poids$_{totalbrut}$) d'une chaîne de produit (1) comportant les produits (3a-3e) respectivement contenus dans des zones de produit individuelles (L$_a$-L$_e$), **caractérisé en ce que**
b) le système comprend un dispositif à rayons X qui permet de déterminer un niveau de gris (niveau de gris$_{totalbrut}$) pour l'ensemble de la chaîne de produit (1),
c) le système comprend un dispositif d'évaluation permettant de sélectionner une zone de produit (L$_a$-L$_e$) contenant un produit individuel (3a-3e),
d) le dispositif d'évaluation est conçu de telle sorte qu'un niveau de gris (niveau de gris$_{zoneproduitbrut}$) de la zone de produit (L$_a$-L$_e$) est déterminé par radiographie et
e) le dispositif d'évaluation est conçu de telle sorte qu'un poids net (poids$_{zoneproduitnet}$) du produit individuel (3a-3e) est déterminé.

12. Système selon la revendication 11, **caractérisé en ce que** le dispositif à rayons X est conçu de telle sorte que pour au moins une sous-région prédéfinie (7, 9, 11, 13, 15, 17, 19, 21, 23, 25, 79, 81, 109) sans produit de la chaîne de produit (1), un niveau de gris (niveau de gris$_{TARE}$) est déterminé.

Fig. 1

EP 3 140 624 B1

Fig. 2

EP 3 140 624 B1

Fig. 3

Fig. 4

Variante „Beutel"

EP 3 140 624 B1

**Kette Gesamt wiegen**
→ $Gewicht_{Gesamtbrutto}$

**Kette Gesamt durchleuchten**
→ $Grauwert_{Gesamtbrutto}$
Option → $Länge_{GesamtKette}$
Option → $Fläche_{GesamtKette}$

**Referenzwert Brutto berechnen**
$Ref_{Brutto} = Gewicht_{Gesamtbrutto} / Grauwert_{Gesamtbrutto}$

**Trennlinien (d.h. Beutel-Regionen) festlegen**
→ $Länge_{RegionBeutel}$
→ $Fläche_{RegionBeutel}$

**Grauwert Beutel-Region aufsummieren**
→ $Grauwert_{BeutelBrutto}$

**Bruttogewicht Beutel berechnen**
$Gewicht_{BeutelBrutto} = Grauwert_{BeutelBrutto} \times Ref_{Brutto}$

( 1 )

Falls möglich:

**TARA-Abschnitt (leer) wiegen**
→ $Gewicht_{AbschnittTARA}$

**TARA-Abschnitt (leer) durchleuchten**
→ $Grauwert_{AbschnittTARA}$
Option → $Länge_{AbschnittTARA}$
→ $Fläche_{AbschnittTARA}$

**Referenzwert TARA berechnen**
$Ref_{TARA} = Gewicht_{AbschnittTARA} / Grauwert_{AbschnittTARA}$

**Kontrollwert TARA berechnen**
$K_{TARA} = Grauwert_{AbschnittTARA} / Fläche_{AbschnittTARA}$

Fig. 5 (1. Teil)

Fig. 5 (2. Teil)

②

TARA Region(en) festlegen
→ Fläche$_{RegionTARA}$

Grauwert TARA-Region aufsummieren
(ggf. Mittelwertbildung mehrerer TARA-Regionen)
→ Grauwert$_{RegionTARA}$

Kontrollwert TARA-Region berechnen
K$_{RegionTARA}$ = Grauwert$_{RegionTARA}$ / Fläche$_{RegionTARA}$

Warnung an Benutzer
(ggf. Korrekturwert bestimmen
Korr = K$_{RegionTARA}$ / K$_{TARA}$ )

NEIN ← K$_{RegionTARA}$ = K$_{TARA}$ ?

JA

Gewicht TARA-Region berechnen
Gewicht$_{RegionTARA}$ = Ref x Grauwert$_{RegionTARA}$

TARA-Gewicht Beutel berechnen
Gewicht$_{BeutelTARA}$ = Gewicht$_{RegionTARA}$ x (Fläche$_{RegionBeutel}$ / Fläche$_{RegionTARA}$)

③

Fig. 5 (3. Teil)

Variante „Kette"

Falls möglich:

---

**Kette Gesamt wiegen**
→ $Gewicht_{Gesamtbrutto}$

**TARA-Abschnitt (leer) wiegen**
→ $Gewicht_{AbschnittTARA}$

---

**Kette Gesamt durchleuchten**
→ $Grauwert_{Gesamtbrutto}$
→ $Länge_{GesamtKette}$
→ $Fläche_{GesamtKette}$

**TARA-Abschnitt (leer) durchleuchten**
→ $Grauwert_{AbschnittTARA}$
Option → $Länge_{AbschnittTARA}$
→ $Fläche_{AbschnittTARA}$

---

**Referenzwert Brutto berechnen**
$Ref_{Brutto} = Gewicht_{Gesamtbrutto} / Grauwert_{Gesamtbrutto}$

**Referenzwert TARA berechnen**
$Ref_{TARA} = Gewicht_{AbschnittTARA} / Grauwert_{AbschnittTARA}$

**Kontrollwert TARA berechnen**
$K_{TARA} = Grauwert_{AbschnittTARA} / Fläche_{AbschnittTARA}$

---

**Trennlinien (d.h. Beutel-Regionen) festlegen**
Option → $Länge_{RegionBeutel}$
Option → $Fläche_{RegionBeutel}$

(11)

Fig. 6 (1. Teil)

EP 3 140 624 B1

Fig. 6 (2. Teil)

$(12)$

TARA Region(en) festlegen
→ Fläche$_{RegionTARA}$

Grauwert TARA-Region aufsummieren
(ggf. Mittelwertbildung mehrerer TARA-Regionen)
→ Grauwert$_{RegionTARA}$

Kontrollwert TARA-Region berechnen
$K_{RegionTARA}$ = Grauwert$_{RegionTARA}$ / Fläche$_{RegionTARA}$

**NEIN**

$K_{RegionTARA} = K_{TARA}$ ?

Warnung an Benutzer
(ggf. Korrekturwert bestimmen
Korr = $K_{RegionTARA}$ / $K_{TARA}$ )

**JA**

Gewicht TARA-Region berechnen
Gewicht$_{RegionTARA}$ = Ref x Grauwert$_{RegionTARA}$

TARA-Gewicht Produktkette berechnen
Gewicht$_{KetteTARA}$ = Gewicht$_{RegionTARA}$ x (Fläche$_{GesamtKette}$ / Fläche$_{RegionTARA}$)

$(13)$

Fig. 6 (3. Teil)

(14)         (15)

NEIN

Normierung gewünscht ?

JA

Normierung des Röntgenbildes
(z.B. durch Subtraktion von $Grauwert_{RegionTARA}$ an jeder Bildposition
(entstandene negative Grauwerte können z.B. gelöscht werden)

→ im Röntgenbild verbleiben nur noch Grauwerte ($Grauwert_{BeutelNetto}$)
der reinen Produktbereiche, d.h. es sind nahezu keine TARA-Grauwerte
mehr im Bild enthalten

Grauwert für jede Beutel-Region aufsummieren
→ $Grauwert_{BeutelBrutto}$

Grauwert für jede Beutel-Region aufsummieren
→ $Grauwert_{BeutelNormiert}$
und
Summe aller normierter Grauwerte der Produktkette neu berechnen
→ $Grauwert_{GesamtNormiert}$

Aufteilung des $Gewicht_{KetteNetto}$ entsprechend den Grauwertanteilen der
einzelnen Beutel ($Grauwert_{BeutelBrutto}$) am Gesamtgrauwert $Grauwert_{Gesamtbrutto}$

Berechnung
$Gewicht_{BeutelNetto} = Gewicht_{KetteNetto} \times (Grauwert_{BeutelBrutto} / Grauwert_{Gesamtbrutto})$

Aufteilung des $Gewicht_{KetteNetto}$ entsprechend den Grauwertanteilen der einzelnen
Beutel ($Grauwert_{BeutelNormiert}$) am Gesamtgrauwert ($Grauwert_{GesamtNormiert}$)

Berechnung
$Gewicht_{BeutelNetto} = Gewicht_{KetteNetto} \times (Grauwert_{BeutelNormiert} / Grauwert_{GesamtNormiert})$

Fig. 6 (4. Teil)

Fig. 7

Fig. 8

Fig. 9

Fig. 10

Fig. 11a

Fig. 11b

Fig. 11c

Fig. 11d

Fig. 11e

Fig. 11f

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2194374 A1

- WO 2011050355 A1